(19) Europäisches Patentamt
European Patent Office
Office européen des brevets

(11) EP 1 461 969 B1

(12) FASCICULE DE BREVET EUROPEEN

(45) Date de publication et mention
de la délivrance du brevet:
**13.03.2013 Bulletin 2013/11**

(21) Numéro de dépôt: **03712204.1**

(22) Date de dépôt: **03.01.2003**

(51) Int Cl.:
**H04W 28/16** (2009.01)  **H04L 1/00** (2006.01)

(86) Numéro de dépôt international:
**PCT/FR2003/000008**

(87) Numéro de publication internationale:
**WO 2003/061308 (24.07.2003 Gazette 2003/30)**

(54) **PROCEDE DE CONTROLE DE CANAUX DE COMMUNICATION ET STATION DE BASE ET TERMINAL METTANT EN OEUVRE LE PROCEDE**

VERFAHREN ZUR STEUERUNG VON KOMMUNIKATIONSKANÄLEN UND BASISSTATION UND ENDGERÄT DAFÜR

METHOD FOR CONTROLLING COMMUNICATION CHANNELS AND BASE STATION AND TERMINAL THEREFOR

(84) Etats contractants désignés:
**AT BE BG CH CY CZ DE DK EE ES FI FR GB GR HU IE IT LI LU MC NL PT SE SI SK TR**

(30) Priorité: **07.01.2002 FR 0200122**

(43) Date de publication de la demande:
**29.09.2004 Bulletin 2004/40**

(73) Titulaire: **Alcatel Lucent**
**75007 Paris (FR)**

(72) Inventeurs:
• **FAUCONNIER, Denis**
  **F-78470 Saint Remy les Chevreuse (FR)**
• **BOUMENDIL, Sarah**
  **F-75015 Paris (FR)**
• **LE STRAT, Evelyne**
  **F-75015 Paris (FR)**

(74) Mandataire: **Sciaux, Edmond et al**
**Alcatel-Lucent International**
**Intellectual Property & Standards**
**32 Avenue Kléber**
**92700 Colombes (FR)**

(56) Documents cités:
• **"Satellite component of UMTS/IMT 2000; A-family; Part 1: Physical channels and mapping of transport channels into physical channels (S-UMTS-A 25.211)" ETSI TS 101 851-1 V1.1.1, décembre 2000 (2000-12), pages 1-17, XP002216376**
• **GHOSH A ET AL: "SHARED CHANNELS FOR PACKET DATA TRANSMISSION IN W-CDMA" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, vol. 2 CONF. 50, 19 septembre 1999 (1999-09-19), pages 943-947, XP001001484 ISBN: 0-7803-5436-2**

**Description**

La présente invention concerne le contrôle des canaux de communication dans un système de communication comprenant une station de base et plusieurs terminaux. Elle a une application particulière, non exclusive, dans les réseaux cellulaires de radiocommunication avec les mobiles.

Il est classique dans les systèmes de communication de gérer l'allocation de canaux par l'intermédiaire d'un organe de contrôle. Celui-ci dispose en effet d'un ensemble de ressources de communication qu'il peut distribuer à sa convenance, par exemple sur requête d'un canal de trafic par un utilisateur.

L'organe de contrôle met donc des canaux de communication à disposition d'une station de base pour que celle-ci puisse communiquer avec des terminaux sous sa zone de couverture. L'organe de contrôle et le terminal dialoguent selon un protocole de gestion de ressources, transparent pour la station de base, notamment pour que le terminal soit informé des canaux à utiliser, sous la forme d'un sous-ensemble des canaux de communication alloués à la station de base.

Une telle gestion des canaux de communication présente certaines rigidités puisqu'elle impose une intervention systématique de l'organe de contrôle en cas de réallocation des canaux de communication, si par exemple on souhaite utiliser, pour un terminal, des canaux qui ne lui ont pas été affectés spécifiquement au début de sa session de communication avec une station de base. Or il y a diverses circonstances où une réaffectation de ressources peut paraître souhaitable au niveau de la station de base sans qu'il soit opportun d'en rendre compte à l'organe de contrôle, par exemple pour des raisons de gestion des ressources matérielles et/ou logicielles à l'intérieur de la station de base ou encore parce que le retard occasionné par l'échange avec l'organe de contrôle n'est pas acceptable compte tenu des caractéristiques du service.

Dans certains cas, l'organe de contrôle alloue à la station de base un ensemble de canaux sans les signaler spécialement au terminal. Lorsqu'elle a besoin de communiquer avec le terminal, la station de base sélectionne l'un de ces canaux et l'indique au terminal, par exemple sur un ou plusieurs canaux de signalisation associés. Une telle méthode est bien adaptée à la mise en oeuvre de services de communication rapide sur des canaux de trafic partagés entre plusieurs terminaux. Les canaux de signalisation associés sont aussi des canaux partagés. Le terminal doit alors connaître le ou les canaux de signalisation associés qu'il doit éventuellement écouter. Si ces canaux lui sont affectés par l'organe de contrôle, le problème précédent se pose de nouveau chaque fois que le besoin apparaît, au niveau de la station de base, de réaffecter les canaux de signalisation partagés utilisés pour un terminal donné.

Une autre possibilité pour faire connaître au terminal le ou les canaux partagés à utiliser consiste en un mécanisme de signalisation rapide, par exemple par vol de symboles, sur un canal de communication dédié établi avec le terminal. Mais il peut en résulter une réduction indésirable de la bande passante procurée par ce canal dédié, en particulier si la liste des canaux possibles est relativement étendue ou inconnue a priori du terminal.

Un but de la présente invention est d'améliorer la souplesse de ces procédés de gestion des canaux de communication partagés.

L'invention propose ainsi un procédé de contrôle de canaux de communication entre une station de base et des terminaux, incluant des canaux partagés par les terminaux pour communiquer avec ladite station de base et au moins un canal dédié de la station de base vers l'un des terminaux. Le procédé comprend les étapes suivantes :

- allouer à la station de base une liste de canaux partagés composée de plusieurs ensembles de canaux partagés ;

- pour une session de communication entre la station de base et ledit terminal, indiquer au terminal, depuis un organe de contrôle, la liste de canaux partagés allouée à la station de base ; et

- au niveau de la station de base, sélectionner pour le terminal l'un des ensembles de canaux partagés et, indépendamment de l'organe de contrôle, indiquer l'ensemble sélectionné au terminal par l'intermédiaire dudit canal dédié.

Un choix dynamique des canaux à utiliser pour un terminal est donc effectué de façon quasi-autonome par la station de base sans intervention de l'organe de contrôle. Pour effectuer ce choix, la station de base n'est pas contrainte par une affectation de canaux qui aurait été effectuée spécialement pour le terminal. Il en résulte une plus grande souplesse dans la gestion des canaux partagés, qui permet un usage optimal des ressources disponibles.

L'organe de contrôle se contente de signaler au terminal la liste allouée à la station de base, à l'établissement de la session de communication ou lors d'une reconfiguration de cette session. Il n'a pas à intervenir lorsque la station de base modifie dynamiquement sa sélection dans la liste qui lui a été allouée.

Le choix des canaux de communication à utiliser par le terminal peut dépendre d'une répartition de ressources de traitement dans la station de base. En particulier, si la station de base possède une architecture modulaire, chaque ensemble de canaux de communication alloué à un terminal peut être traité par un module donné.

Les canaux de communication partagés peuvent être des canaux de signalisation ou des canaux de trafic.

Dans le cas de canaux de signalisation, ceux-ci peuvent contenir des informations permettant à un terminal de lire un canal de trafic partagé.

L'indication des canaux de communication à utiliser par le terminal peut avantageusement lui être transmise par une insertion de cette information dans le flux de données qu'on lui envoie sur un canal de communication dédié. Cette insertion peut être réalisée par un vol de symboles dans le flux émis. De cette façon, la transmission de l'information ne nécessite pas d'introduire de nouvelles ressources de communication spécifiques à cet usage.

Dans le cas, où l'on souhaite transmettre cette information avec une périodicité faible, et éventuellement avec une certaine redondance, pour augmenter la fiabilité de sa réception par le terminal, il faut veiller à ce que le vol de symboles ne se révèle pas nuisible aux performances de décodage des informations reçues du fait d'un entrelacement des données transmises. On peut donc faire varier la position des symboles volés pour éviter les regroupements des symboles vides d'information lors du décodage effectué par le terminal.

Si une autre information, comme une indication d'un canal parmi l'ensemble sélectionné que le terminal doit décoder, fait l'objet d'un vol de symboles sur le canal dédié, la position des symboles volés pour indiquer l'ensemble sélectionné au terminal, doit de préférence se faire en adéquation avec cet autre vol de symboles.

L'invention propose également une station de base pour un système de communication avec des terminaux, comprenant :

- des moyens pour obtenir, en liaison avec un organe de contrôle, une liste de canaux partagés allouée à la station de base et composée de plusieurs ensembles de canaux partagés ;

- des moyens pour sélectionner, pour l'un des terminaux, l'un des ensembles de canaux partagés ; et

- des moyens pour indiquer audit terminal par l'intermédiaire d'un canal dédié, indépendamment de l'organe de contrôle, quel ensemble est sélectionné parmi la liste allouée à la station de base.

Enfin, l'invention propose un terminal pour un système de communication comprenant au moins une station de base et un organe de contrôle et utilisant des canaux partagés avec d'autres terminaux pour communiquer avec la station de base et au moins un canal dédié de la station de base vers ledit terminal. Ce terminal selon l'invention comprend :

- des moyens pour recevoir de l'organe de contrôle une liste de canaux partagés allouée à la station de base, composée de plusieurs ensembles de canaux partagés, pour une session de communication avec la station de base ; et

- des moyens pour recevoir de la station de base, par l'intermédiaire dudit canal dédié, une indication d'un des ensembles de canaux partagés sélectionné par la station de base pour ledit terminal.

D'autres particularités et avantages de la présente invention apparaîtront dans la description ci-après d'exemples de réalisation non limitatifs, en référence aux dessins annexés, dans lesquels :

- la figure 1 est un schéma illustrant la structure de trame employée sur les liaisons descendantes dans le système UMTS en mode FDD ;

- les figures 2 et 3 sont des schémas synoptiques d'une station de base et d'un terminal UMTS ;

- les figures 4 et 5 sont des schémas synoptiques des blocs de multiplexage et de démultiplexage de la station de base et du terminal selon les figures 2 et 3 ;

- la figure 6 est un schéma simplifié indiquant le fonctionnement du premier entrelaceur dans un réseau radio UMTS ;

- la figure 7 est un schéma simplifié indiquant le fonctionnement du second entrelaceur dans un réseau radio UMTS ;

- la figure 8 est une représentation schématique d'une station de base à architecture modulaire ; et

- la figure 9 est un exemple de vol de symboles mis en oeuvre dans un mode de réalisation de l'invention.

Dans la présente description, l'invention sera décrite plus particulièrement dans son application, non limitative, aux réseaux de radiocommunication de troisième génération de type UMTS (« Universal Mobile Telecommunication System ») en mode FDD (« Frequency Division Duplex »).

L'UMTS est un système de radiocommunication utilisant un accès multiple à répartition par codes (CDMA, « Code-Division Multiple Access »), c'est-à-dire que les symboles transmis sont multipliés par des codes d'étalement constitués d'échantillons appelés « chips » dont la cadence (3,84 Mchip/s dans le cas de l'UMTS) est supérieure à celle des symboles transmis. Les codes d'étalement distinguent différents canaux physiques PhCH (« Physical CHannel ») qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés. Pour l'UMTS en mode FDD sur la liaison descendante, un code de brouillage est alloué à chaque station de base, et différents canaux physiques utilisés par cette station de base sont distingués par des codes de « channelisation » mutuellement orthogonaux. Pour chaque PhCH, le code d'étalement global est le produit du code de « channelisation » et du code de brouillage de la station de base. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

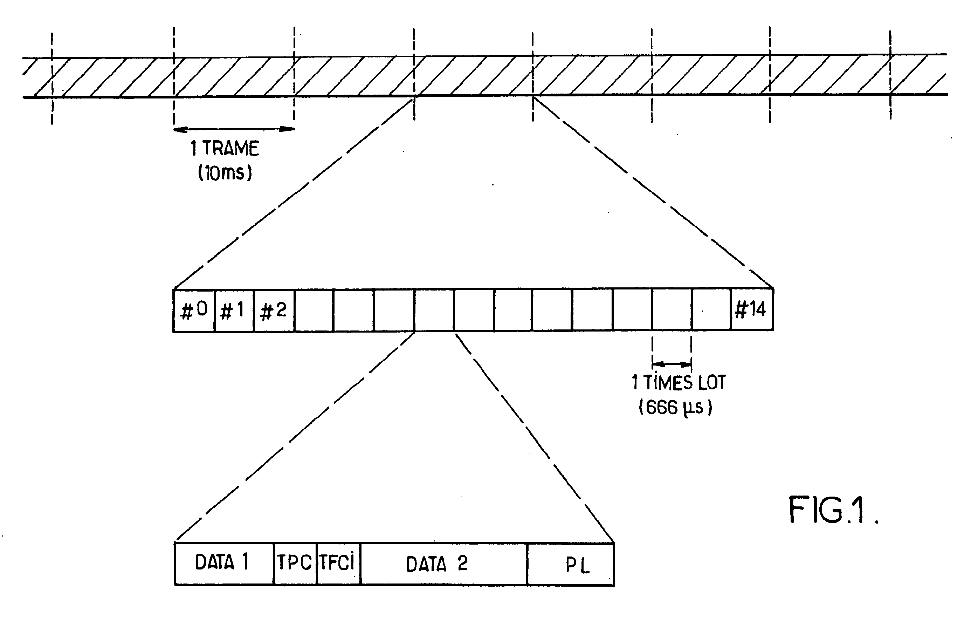

Les différents canaux physiques obéissent à une structure de trame illustrée par la figure 1. Les trames de 10 ms se succèdent sur la fréquence porteuse utilisée par la station de base. Chaque trame est subdivisée en N = 15 tranches temporelles (« timeslots ») de 666 $\mu$s. Chaque tranche peut porter les contributions superposées d'un ou plusieurs canaux physiques, comprenant des canaux communs et des canaux dédiés DPCH (« Dedicated Physical CHannel »). Le diagramme inférieur de la figure 1 illustre la contribution d'un DPCH descendant à une tranche temporelle en mode FDD, qui comporte :

- un certain nombre de symboles pilotes PL. Connus a priori du terminal, ces symboles PL lui permettent d'acquérir la synchronisation et d'estimer des paramètres utiles à la démodulation du signal ;

- une indication de combinaison de format de transport TFCI (« Transport Format Combination Indicator ») ;

- une commande de puissance d'émission TPC (« Transmit Power Control ») à utiliser par le terminal sur la liaison montante ; et

- deux champs de données, notés DATA1 et DATA2, placés de part et d'autre du champ TPC.

Le DPCH peut ainsi être vu comme réunissant un canal physique dédié pour le contrôle, ou DPCCH (« Dedicated Physical Control CHannel »), correspondant aux champs TFCI, TPC et PL, et un canal physique dédié pour les données, ou DPDCH (« Dedicated Physical Data CHannel »), correspondant aux champs DATA1 et DATA2.

La modulation utilisée sur les canaux DPCH est une modulation de phase en quadrature (QPSK, « Quadrature Phase Shift Keying »). Les séquences de symboles soumises au modulateur sont donc composées de symboles quaternaires consistant chacun en l'assemblage de deux bits.

Il est possible, pour une même communication, d'établir plusieurs DPCH correspondant à des codes de « channelisation » différents, dont les facteurs d'étalement peuvent être égaux ou différents. Cette situation est notamment rencontrée lorsqu'un DPDCH ne suffit pas à fournir le débit de transmission requis par l'application. Dans la suite, on note Y le nombre, égal ou supérieur à 1, de canaux physiques descendants utilisés pour une même communication depuis une station de base.

Par ailleurs, cette même communication peut utiliser un ou plusieurs canaux de transport TrCH (« Transport CHannel »). Des TrCH multiplexés sont typiquement utilisés pour des transmissions multimédia, dans lesquelles des signaux de natures différentes à transmettre simultanément requièrent des caractéristiques de transport différentes, notamment en matière de protection contre les erreurs de transmission. D'autre part, certains codeurs peuvent délivrer, pour représenter un signal donné (par exemple audio), plusieurs flux de symboles ayant des importances perceptuelles différentes et requérant donc des degrés de protection différents. On utilise alors des TrCH multiples pour transporter ces différents flux de symboles. Dans la suite, on note X le nombre, égal ou supérieur à 1, de canaux de transport utilisés pour une communication donnée sur les Y canaux physiques précités.

Pour chaque canal de transport i ($1 \leq i \leq X$), il est défini un intervalle de temps de transmission TTI (« Transmission Time Interval ») composé de $F_i$ trames consécutives, avec $F_i$ = 1, 2, 4 ou 8. De façon typique, on utilise un TTI d'autant plus court que le signal véhiculé par le canal de transport doit être reçu avec un faible retard. Par exemple, un TTI de 20 ms ($F_i$ = 2) sera utilisé pour une application de téléphonie, tandis qu'un TTI de 80 ms ($F_i$ = 8) pourra être utilisé pour une application de transmission de données.

Le multiplexage des X flux de symboles d'information issus des TrCH sur les Y PhCH est décrit en détail dans la spécification technique 3G TS 25.212, « Multiplexing and channel coding (FDD), Release 1999 », version 3.7.0, publiée en septembre 2001 par le 3GPP (3rd Generation Partnership Project).

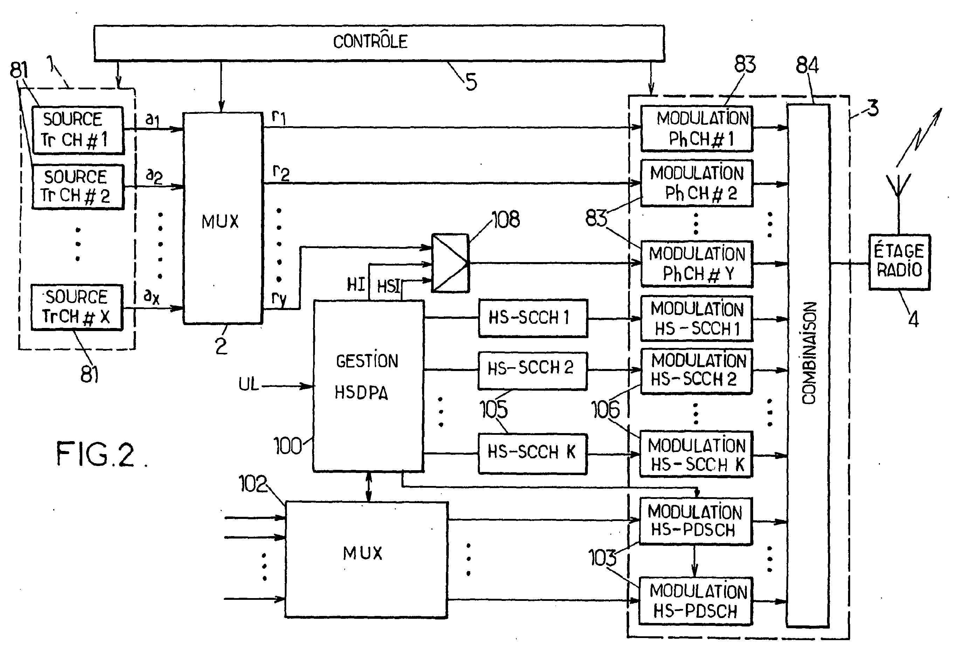

La figure 2 illustre schématiquement la partie émission d'une station de base UMTS fonctionnant en mode FDD. Le bloc 1 désigne l'ensemble des sources 81 délivrant respectivement des flux de symboles d'information $a_i$ ($1 \leq i \leq X$) relativement aux X TrCH utilisés dans une communication sur des ressources dédiées entre la station de base et un terminal.

Le bloc 2 multiplexe les flux $a_i$ pour former ce qu'on appelle un canal de transport composite codé, ou CCTrCH (« Coded Composite Transport CHannel »), qui est ensuite subdivisé en un ou plusieurs canaux physiques PhCH#j ($1 \leq j \leq Y$) sur lesquels sont transmis des flux synchronisés de symboles respectivement notés $r_j$.

Le bloc 3 désigne les circuits qui modulent les flux $r_j$ et les combinent pour former un signal traité par l'étage radio 4 avant d'être émis sur l'interface air. Le bloc 3 assure l'étalement, par les codes de « channellisation » affectés aux PhCH, de chacun des flux $r_j$ (modules 83), ainsi que des flux supplémentaires éventuellement délivrés pour d'autres communications supportées au même moment par la station de base, les différents flux de symboles ainsi étalés étant ensuite sommés puis multipliés par le code de brouillage de la station de base (module 84). Le séquencement et le paramétrage des blocs 1, 2, 3 est assuré par une unité de contrôle 5 conformément aux paramètres définis pour la station de base et pour la communication considérée.

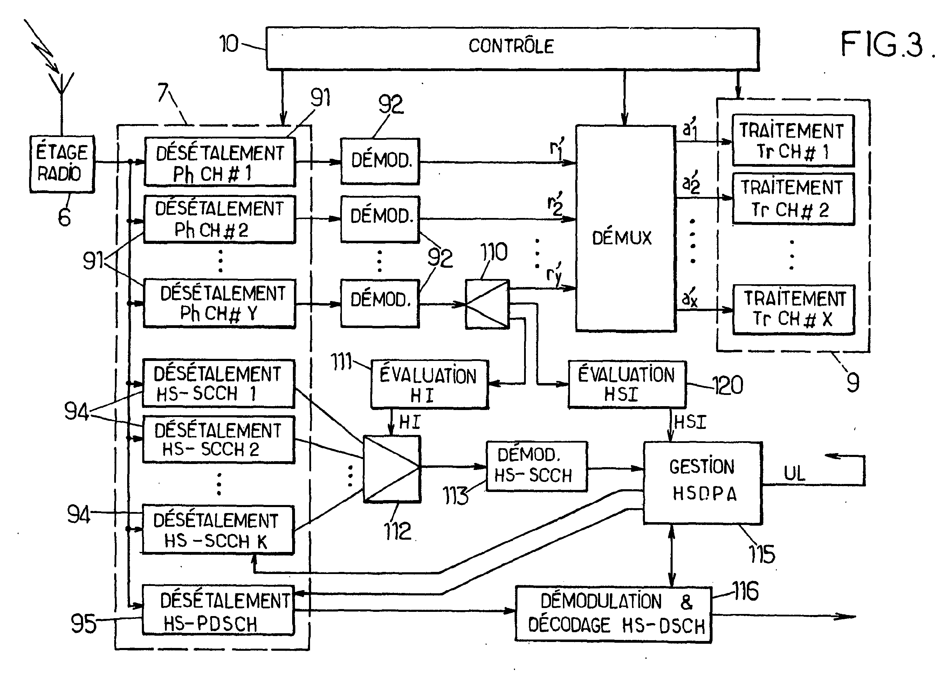

La figure 3 illustre schématiquement la partie réception d'un terminal UMTS communiquant en mode FDD avec une station de base selon la figure 2. Le bloc 7 comportent des modules 91 (filtres adaptés) pour désétaler le signal en bande de base restitué par l'étage radio 6 à partir du signal capté par l'antenne du terminal, en utilisant le code de brouillage de la station de base et les Y codes de « channelisation » respectifs affectés au terminal. Pour chacun des Y canaux physiques j ($1 \leq j \leq Y$), un module 92 démodule le signal désétalé pour délivrer des données respectives $r'_j$ représentant des estimations des symboles du flux $r_j$ formé au niveau de la station de base.

Dans le cas où les symboles sont des bits, les estimations $r'_j$ sont des « softbits », c'est-à-dire des valeurs numériques dont le signe caractérise le bit estimé et la valeur absolue représente la vraisemblance de cette estimation.

Les Y flux de données $r'_j$ sont fournis à un bloc de démultiplexage 8 qui effectue les opérations inverses du multiplexeur 2 de la station de base. Ce bloc 8 délivre pour chaque canal de transport i ($1 \leq i \leq X$) un flux $a'_i$ d'estimations (softbits ou hardbits) des symboles du flux $a_i$. Ces estimations $a'_i$ sont fournies au circuit de traitement du TrCH i appartenant au bloc 9. Le séquencement et le paramétrage des blocs 7, 8, 9 est assuré par une unité de contrôle 10 du terminal.

Ainsi qu'il est usuel dans le domaine des radiocommunications numériques, les blocs 1-3, 5 de la station de base et 7-10 du terminal peuvent être réalisés en programmant un ou plusieurs processeurs de signal numérique, et/ou en utilisant des circuits logiques spécifiques.

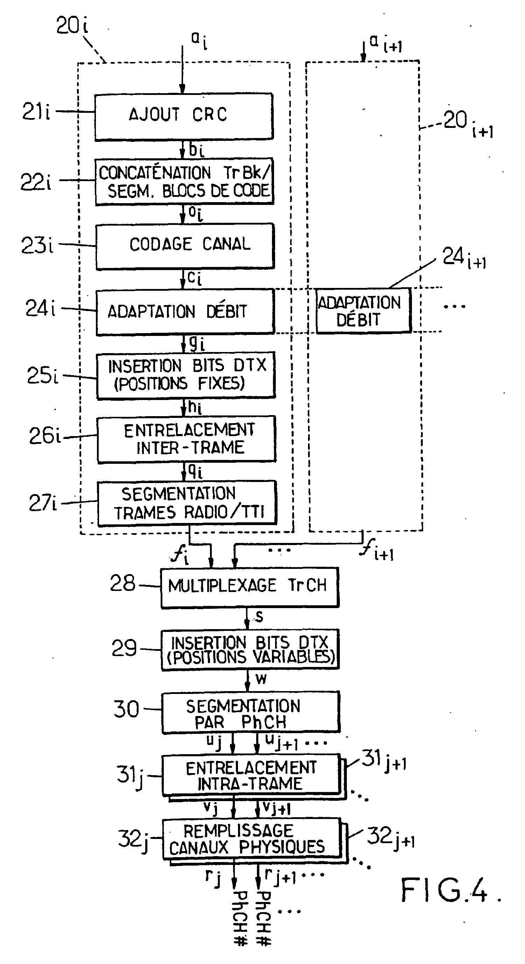

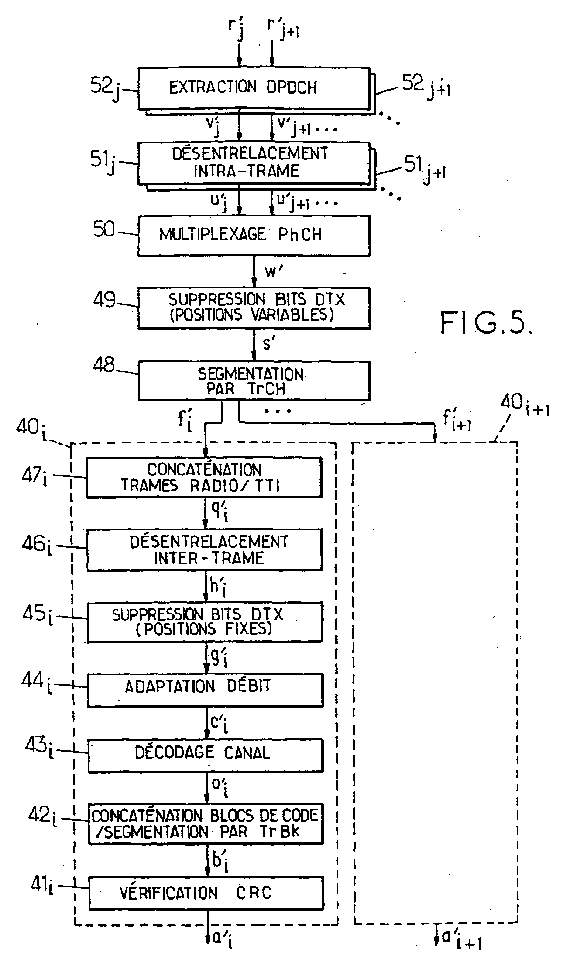

Les figures 4 et 5 détaillent respectivement les différents modules fonctionnels des blocs de multiplexage 2 et de démultiplexage 8 (voir la spécification 3G TS 25.212 précitée). Sur ces figures, les références portant l'indice i ($1 \leq i \leq X$) désignent les éléments se rapportant au TrCH i (blocs $20_i$ et $40_i$), les références portant l'indice j désignent les éléments se rapportant au PhCH j ($1 \leq j \leq Y$), et les références sans indice se rapportent aux opérations effectuées pour chaque trame au niveau CCTrCH.

Le flux $a_i$ à transmettre sur chaque TrCH i est composé de symboles binaires délivrés sous forme de blocs de transport successifs TrBk (« Transport Block »). Le module $21_i$ complète chaque TrBk en y ajoutant un code de redondance cyclique CRC, servant à détecter d'éventuelles erreurs de transmission. Les TrBk $b_i$ sont ensuite concaténés et/ou segmentés par le module $22_j$ pour former des blocs $o_i$ de taille appropriée pour l'entrée du codeur de canal $23_i$.

Pour chaque TTI du canal de transport i, le codeur de canal $23_i$ délivre une séquence $c_i$ de $E_i$ bits codés notés $c_{i,m}$ ($1 \leq m \leq E_i$). Deux types de code correcteur d'erreurs peuvent être appliqués par le module $23_i$ :

- un code convolutif de rendement 1/2 ou 1/3 et de longueur de contrainte K=9;

- un turbocode de rendement 1/3 pour les applications requérant les taux d'erreurs les plus faibles. Dans ce cas, les bits $c_{i,3p+q}$ de la séquence de sortie du codeur sont des bits systématiques (recopiés des blocs d'entrée $o_i$) si q = 1, et des bits de parité si q = 2 ou 0.

Les modules $24_i$ d'adaptation de débit (« rate matching ») suppriment (poinçonnent) ou répètent des bits des séquences $c_i$ afin d'adapter le débit binaire des TrCH au débit global admissible sur le ou les PhCH compte tenu de leurs facteurs d'étalement. Pour chaque TTI sur le TrCH i, il est défini, à partir des informations fournies par les couches supérieures de protocole, un paramètre $\Delta N_i^{TTI}$ négatif dans le cas du poinçonnage et positif dans le cas de la répétition. La séquence $g_i$ produite par le module $24_i$ pour le TTI est composée de $G_i = E_i + \Delta N_i^{TTI}$ bits notés $g_{i,n}$ ($1 \leq n \leq G_i$). Dans le cas où le module $23_i$ a utilisé un turbocode, le poinçonnage appliqué par le module $24_i$ si $\Delta N_i^{TTI} < 0$ est limité aux bits de parité compte tenu de l'importance plus grande des bits systématiques pour le décodeur.

Dans une trame donnée, les périodes consacrées aux différents TrCH de la communication peuvent avoir des positions fixes (avant l'entrelacement intra-trame évoqué ci-après) ou des positions variables. Dans le cas des positions fixes, il peut être nécessaire d'adjoindre à la séquence $g_i$, au moyen du module $25_i$, un ou plusieurs symboles marqués qui ne seront pas transmis (la valeur du bit correspondant sera par exemple mise à zéro au lieu de $\pm 1$ dans le flux de

sortie $r_j$ comportant un tel symbole pour que la puissance d'émission du symbole soit nulle). On note « $\delta$ » les bits de DTX (« Discontinuous Transmission ») ainsi marqués. Dans l'exemple d'implémentation considéré ici de manière non limitative, chaque symbole $h_{i,n}$ de la séquence $h_i$ délivrée par le module $25_i$ ($0 \leq n \leq F_i.H_i$, avec $G_i \leq F_i.H_i$) est représenté par deux bits :

- $h_{i,n} = (0, g_{i,n})$ si $n \leq G_i$ ;

- $h_{i,n} = (1, 0)$ si $G_i < n \leq F_i.H_i$ (bits marqués « $\delta$ »).

Le module d'entrelacement $26_i$ effectue une permutation de la séquence $h_i$, en vue de distribuer les symboles relevant du TTI sur les $F_i$ trames qu'il couvre. Cet entrelacement inter-trame (si $F_i > 1$) consiste à écrire successivement les symboles de la séquence $h_i$ dans les lignes d'une matrice comportant $F_i$ colonnes, à permuter les colonnes de la matrice, puis à lire les symboles de la matrice colonne après colonne pour former la séquence notée $q_i$. Le module $27_i$ découpe ensuite la séquence $q_i$ en $F_i$ segments de symboles consécutifs correspondant aux $F_i$ colonnes de la matrice d'entrelacement après permutation, et affecte respectivement ces segments aux $F_i$ trames du TTI pour former une séquence notée $f_i$ pour chaque trame et chaque TrCH i ($1 \leq i \leq X$).

Conformément à la spécification 3G TS 25.212, la permutation de colonnes effectuée par l'entrelaceur inter-trame $26_i$ est telle que le n-ième symbole $h_{i,n}$ du TTI, avec $n = (\alpha-1).F_j + \beta$, $\alpha$ et $\beta$ étant des entiers tels que $1 \leq \alpha \leq R1$ et $1 \leq \beta \leq F_i$, se retrouve à la $\alpha$-ième position dans la $\gamma$-ième trame du TTI, soit :

$$h_{i,n} = q_{i,n'}$$

avec

$$n' = (\gamma-1).R1 + \alpha \qquad\qquad (1)$$

où R1 désigne le plus petit entier tel que R1 x $F_i$ soit au moins égal au nombre $X_i$ de bits de la trame courante ($X_i \leq R1 \times F_i$), et $\gamma$ est un index de trame défini par l'entier $\beta$ d'après la permutation : $\gamma-1 = BR(n-1, F_i) = BR(\beta-1, F_i)$. Le nombre $BR(x, 2^y)$ est ici défini comme l'entier dont la représentation en base 2 correspond à la lecture en sens inverse de la représentation en base 2 sur y chiffres du reste de la division euclidienne de x par $2^y$ (par exemple, $BR(51, 8) = BR(3, 8) = BR([011]_2, 2^3) = [110]_2 = 6$).

Les séquences $f_i$ produites pour les différents TrCH de la communication ($1 \leq i \leq X$) sont multiplexées, c'est-à-dire placées les unes à la suite des autres, par un module 28 formant une séquence s de S symboles pour le CCTrCH. Dans le cas où les périodes consacrées aux différents TrCH de la communication ont des positions variables, il peut être nécessaire d'adjoindre à la séquence s, au moyen du module 29, un ou plusieurs symboles marqués « $\delta$ ». Dans l'exemple d'implémentation considéré ici, chaque symbole $w_k$ de la séquence w délivrée par le module 29 ( $1 \leq k \leq \sum_{j=1}^{Y} U_j$ , avec $S \leq \sum_{j=1}^{Y} U_j$ et $U_j$ égal au nombre de bits par trame sur le DPDCH du canal physique j, lequel nombre dépend du facteur d'étalement alloué au canal) est représenté par deux bits :

- $W_k = (0, s_k)$ si $k \leq S$ ;

- $w_k = (1,0)$ si $S < k \leq \sum_{j=1}^{Y} U_j$ .

Le module 30 découpe ensuite la séquence w en Y segments de $U_1, U_2, ..., U_Y$ symboles consécutifs, et affecte respectivement ces segments aux Y PhCH pour former une séquence notée $u_j$ pour chaque PhCH j ($1 \leq j \leq Y$). Le module d'entrelacement $31_j$ effectue une permutation de la séquence $u_j$, en vue de distribuer les symboles, au sein de la trame courante, sur les Y PhCH employés par la communication. Cet entrelacement consiste à écrire successivement les symboles de la séquence $u_j$ dans les lignes d'une matrice comportant C2 = $2 \times N$ = 30 colonnes, à permuter les colonnes de la matrice, puis à lire les symboles de la matrice colonne après colonne pour former la séquence de $U_j$ symboles notée $v_j$.

Le module $32_j$ de remplissage du canal physique (« physical channel mapping ») distribue finalement les symboles successifs de la séquence $v_j$ dans les champs DATA1 et DATA2 des tranches temporelles de la trame courante. Le module $32_j$ peut traduire les bits d'information à valeurs 0 ou 1 en bits signés ($\pm 1$), et affecter la valeur 0 aux bits marqués « $\delta$ ». Il complète en outre le flux $r_j$ adressé au bloc 3 en insérant les bits de signalisation adéquats dans les champs PL, TFCI et TPC du DPCCH.

Conformément à la spécification 3G TS 25.212, si on désigne par R2 le plus petit entier tel que R2 x C2 soit au moins égal au nombre $U_j$ de bits de la trame courante ($U_j \leq R2 \times C2$), la permutation de colonnes effectuée par l'entrelaceur intra-trame $31_j$ est telle que le n-ième symbole $u_{j,n}$ de la trame courante, avec n = ($\alpha$-1).C2 + $\beta$, $\alpha$ et $\beta$ étant des entiers tels que $1 \leq \alpha \leq R2$ et $1 \leq \beta \leq C2 = 2 \times N$, se retrouve à la ($\varepsilon$.R2+$\alpha$)-ième position dans une $\gamma$-ième tranche temporelle de la trame, soit

$$u_{j,n} = v_{j,n'}$$

avec

$$n' = 2.(\gamma - 1).R2 + \varepsilon.R2 + \alpha \qquad\qquad (2)$$

où $\varepsilon$ = 0 ou 1 et 2.($\gamma$-1) + $\varepsilon$ est un entier obtenu en fonction de $\beta$-1 par une permutation déterminée $perm_{C2}$ sur les entiers compris entre 0 et C2-1 : 2.($\gamma$-1) + $\varepsilon$ = $perm_{C2}(\beta-1)$.

Le bloc de démultiplexage 8 du terminal comporte des modules qui effectuent, dans le sens inverse, les opérations duales des modules $20_j$-$32_j$ du bloc de multiplexage 2 de la station de base. Sur la figure 5, les références primées correspondent aux estimations des symboles portant les mêmes références non primées sur la figure 4. Pour les symboles composés de deux bits formatés comme indiqué ci-dessus en raison du marquage des bits « $\delta$ », ces estimations (softbits) se rapportent au bit de poids le plus faible.

Pour chaque trame de 10 ms et chaque PhCH, le module $52_j$ extrait des champs DATA1 et DATA2 du signal démodulé la séquence $v'_j$ de $U_j$ softbits relevant du DPDCH. Le module de désentrelacement $51_j$ applique à cette séquence $v'_j$ la permutation inverse du module $31_j$ pour restituer la séquence de softbits $u'_j$. Les Y séquences $u'_j$ sont mises bout à bout par le module de multiplexage 50 pour former la séquence de softbits w' relative au CCTrCH. Dans le cas où les TrCH sont à positions variables, le module 49 supprime les $\sum_{j=1}^{Y} U_j - S$ derniers softbits de la séquence w', qui correspondent à des bits « $\delta$ ». La séquence de softbits s' produite par le module 49 est découpée par le module de segmentation 49 en X sous-séquences $f_i$ respectivement affectées aux TrCH.

Pour chaque TrCH i dont le TTI comporte plusieurs trames ($F_i > 1$), le module $47_i$ concatène les sous-séquences produites relativement aux différentes trames pour former la séquence $q'_i$ soumise au module de désentrelacement inter-trame $46_i$. Celui-ci opère la permutation inverse du module $26_i$ pour restituer la séquence de softbits $h'_i$. Dans le cas où les TrCH sont à positions fixes, le module $45_i$ supprime les $F_i.H_i - G_i$ derniers softbits de la séquence $h'_i$, qui correspondent à des bits « $\delta$ ». La séquence de softbits s' produite par le module 49 est ensuite traitée par le module d'adaptation de débit $44_i$ qui effectue les opérations suivantes :

- insertion d'un softbit nul (vraisemblance minimale) à la place de chaque bit qui a été poinçonné à l'émission ;

- réévaluation de chaque softbit correspondant à un bit qui a été répété à l'émission, afin d'en affiner la vraisemblance.

La séquence de sortie $c'_i$ du module $44_i$ est décodée par le module $43_i$ afin de corriger d'éventuelles erreurs de transmission. Les symboles des blocs décodés $o'_i$ délivrés par le module $43_i$ peuvent être des softbits, ou des hardbits si les mesures de vraisemblance ne sont plus nécessaires dans les traitements ultérieurs. A partir de ces blocs $o'_i$, le module $42_i$ reconstitue les TrBk estimés $b'_i$, et le module $41_i$ vérifie l'intégrité du CRC pour valider ces TrBk dans le flux de sortie $a'_i$ relatif au TrCH i.

On se place désormais dans un mode de réalisation particulier et non restrictif de l'invention lié à la fonctionnalité HSDPA (« High Speed Downlink Packet Access »). Une description d'ensemble de cette fonctionnalité peut être trouvée dans la spécification technique TS 25.308, Release 5, version 5.0.0, publiée en septembre 2001 par le 3GPP.

Le HSDPA permet la transmission par une station de base de données à haut débit pour un ensemble de stations mobiles situées dans la zone de couverture de la station de base. Il s'appuie sur un canal de transport descendant partagé à haut débit : le HS-DSCH (« High Speed - Downlink Shared Channel »). Dans le mode FDD auquel on s'intéresse plus particulièrement dans la présente description, ce canal a notamment pour caractéristiques : (i) un intervalle de temps de transmission (TTI) de 2 millisecondes correspondant à 3 tranches temporelles de 666 $\mu$s ; (ii) des processus hybrides de requête de retransmission des données de type HARQ (« Hybrid Automatic Repeat reQuest ») ; et (iii) un mécanisme adaptatif de codage et de modulation. Au niveau du réseau d'accès, une couche spécifique du protocole de contrôle d'accès au médium (MAC, « Medium Access Control »), est localisée dans la station de base. Ainsi, on fait en sorte d'offrir un débit maximum sur ce canal. Pour la même raison, le HS-DSCH utilise un facteur d'étalement relativement faible, égal à 16. Dans une cellule donnée et pour un code de brouillage donné, il peut être établi jusqu'à 15 canaux HS-DSCH utilisant des codes de « channelisation » orthogonaux.

Pour un canal HS-DSCH, il doit être prévu un ou plusieurs canaux physiques de contrôle partagés spécifiques appelés HS-SCCH (« High Speed - Shared Control CHannel ») ou SCCH-HS. Les informations de signalisation portées par les HS-SCCH identifient les terminaux destinataires des blocs transmis sur les HS-DSCH, et leur fournissent un certain nombre d'indications utiles à la réception de ces blocs :

- un indicateur de format de transport et de ressources (TFRI, « Transport Format and Resource Indicator »), donnant les informations concernant le format de la partie dynamique du canal HS-DSCH, notamment pour le schéma de modulation employé, et les ressources physiques allouées (codes de « channelisation ») ;

- les informations liées au protocole HARQ, notamment la version de redondance, un identifiant de processus HARQ, et un indicateur de nouveaux blocs de données.

Un canal HS-SCCH utilise un facteur d'étalement de 128, avec un TTI identique à celui du HS-DSCH (3 tranches de 666 $\mu$s). Tous les HS-PDSCH (c'est-à-dire les canaux physiques issus des HS-DSCH) au sein d'une cellule sont alignés en temps et la synchronisation des HS-SCCH est avancée de deux tranches (1333 $\mu$s) par rapport à celle des HS-PDSCH associés, ce qui permet au terminal destinataire d'un bloc de données transmis sur un HS-PDSCH dans un TTI HSDPA de 2 ms de connaître les informations nécessaires à sa réception. Certaines informations contenues dans le TFRI, à savoir les codes alloués ainsi que la modulation utilisée, sont primordiales pour les terminaux car elles leur permettent de commencer à démoduler le ou les HS-PDSCH qui les concernent. C'est pourquoi ces informations du TFRI sont incluses dans la première tranche de chaque TTI sur le HS-SCCH. Ainsi, un décodage rapide du HS-SCC permet à un terminal de lire le contenu du HS-PDSCH dans le prochain TTI sans perte d'information.

Les informations de contre-réaction retournées par le terminal, notamment pour les acquittements du protocole HARQ et pour les mesures utiles à la modulation adaptative, sont transmises par une ressource montante dédiée, sur un canal nommé DPCCH-HS (« Dedicated Physical Control Channel - High Speed »).

A l'établissement des HS-DSCH et HS-SCCH, le contrôleur de réseau radio (RNC, « Radio Network Controller ») qui supervise la station de base (CRNC, « Controlling RNC ») lui alloue les ressources de code correspondantes, par cellule. A titre d'exemple, on peut prévoir de réserver une liste de L = 16 codes de facteur d'étalement 128 pour les HS-SCCH.

Selon l'invention, lorsqu'une session HSDPA est ouverte (ou reconfigurée) pour un terminal donné, le CRNC lui indique la liste de L codes HS-SCCH allouée à la station de base. Cette liste est composée de plusieurs ensembles de K codes. Cette subdivision en ensembles de K codes peut être imposée directement par le CRNC à la station de base ou faire l'objet d'une négociation entre eux à travers l'interface dite *lub* normalisée par le 3GPP.

Pour adresser des blocs de données HS-SCCH à un terminal donné, la station de base sélectionne d'abord un ensemble de K codes et l'indique au terminal. Elle sélectionne ensuite l'un des K codes de cet ensemble en fonction des disponibilités sur le TTI HS-SCCH concerné. Le nombre K de codes HS-SCCH par ensemble est par exemple compris entre 1 et 4 pour chaque terminal. On considèrera ci-après qu'il est égal à 4, sans restreindre la généralité de l'exposé.

Dans une réalisation typique, un terminal opère en permanence le désétalement du signal reçu au moyen des K = 4 codes HS-SCCH qui lui ont été indiqués. Toutefois, pour éviter de solliciter inutilement les ressources du terminal, il est judicieux que celui-ci ne décode que le HS-SCCH qui le concerne le cas échéant. Pour cela, on prévoit une signalisation spécifique sur la voie descendante, empruntant un canal dédié (DPCH) fonctionnant en parallèle avec le HS-PDSCH pour ce terminal.

Cette signalisation spécifique comporte un indicateur de deux bits appelé HI (« HS-DSCH Indicator »), porté par le DPCH et indiquant au terminal que des informations lui sont destinées sur un HS-SCCH identifié. Les deux bits du HI définissent quatre états qui permettent de distinguer lequel des quatre HS-SCCH porte le cas échéant de l'information concernant le terminal. Si le HI est transmis avec une puissance nulle (ce qui constitue un cinquième état), aucun des quatre HS-SCCH ne porte d'information concernant le terminal. Dans ce dernier cas, le terminal peut attribuer une valeur au HI qui le conduit à décoder pour rien un HS-SCCH, mais il s'en aperçoit rapidement car le HS-SCCH indique aussi le terminal destinataire.

Le HI destiné à un terminal doit être transmis, lu et interprété par ce terminal avant la fin de la première tranche du HS-SCCH, afin qu'il dispose à temps des informations du TFRI (code HS-DSCH alloué et modulation utilisée) qui sont nécessaires pour pouvoir démoduler un HS-PDSCH le cas échéant.

Un problème que pose l'insertion du HI dans le flux transmis sur le DPCH est que sa cadence de transmission est élevée et que sa récupération par le terminal doit être très rapide. Il est nécessaire d'en prévoir 5 transmissions par trame, soit $5 \times F_i$ transmissions par TTI d'un canal de transport dédié correspondant à ce DPCH, et le terminal ne peut pas attendre d'avoir reçu un TTI complet à décoder avant de connaître les valeurs de ces HI. En conséquence, le HI doit être inséré par exemple après poinçonnage, ou vol, de symboles QPSK en aval du second entrelaceur $30_j$. Ainsi, les deux bits d'un HI forment un symbole QPSK substitué, en entrée du modulateur, à un symbole de la séquence à transmettre. Cette substitution n'a lieu que dans certaines tranches seulement de la trame.

De retour à la figure 2, le module 100 a pour fonction de gérer la fonctionnalité HSDPA dans la station de base. Il intègre notamment l'instance du protocole MAC utile à la supervision du mode HSDPA. Ce module contrôle le multiplexage temporel des flux de transport pour les canaux HS-DSCH de la cellule, qui est réalisé, à raison d'un flux par terminal et par TTI sur un code donné, à partir des flux d'information reçus du RNC par le module de multiplexage 102 représenté sur la figure 2. Les signaux émis sur le ou les canaux physiques correspondants HS-PDSCH sont étalés et modulés dans le bloc 3, en appliquant le cas échéant le schéma de modulation adaptative spécifié (modules 103), puis combinés par le module 84 avec ceux des autres canaux physiques pour être transmis à l'étage radio 4 et émis sur la voie radio, comme exposé précédemment.

Le module de gestion HSDPA 100 prend en compte les informations de contre-réaction UL retournées par les terminaux sur la voie montante pour organiser la planification des blocs HARQ ainsi que l'adaptation de la modulation pour chaque TTI du HS-DSCH. Le module 100 contrôle en outre l'émission sur les canaux HS-SCCH. Les signaux correspondants sont codés par les modules 105 à partir des informations spécifiées par le module 100 (identification des terminaux, TFRI, informations de HARQ, etc.). Ces signaux sont étalés et modulés dans le bloc 3 (modules 106), puis combinés par le module 84 avec ceux des autres canaux physiques.

Le module de gestion HSDPA 100 contrôle aussi la transmission du HI par vol de symboles sur les flux de symboles QPSK fournis aux modulateurs des DPCH, avant que ceux-ci soient modulés dans le bloc 3. Le HI est inséré au moyen d'un multiplexeur 108 placé en aval du bloc de multiplexage 2, précédemment décrit en référence à la figure 4, sur le flux de symboles relatif à un PhCH utilisé par le terminal.

Pour chaque utilisateur auquel un bloc HSDPA est destiné, le module 100 sélectionne :

(1) un ou plusieurs codes HS-PDSCH et un TTI prochainement disponible sur ce code pour recevoir le bloc ;

(2) un code HS-SCCH, parmi les K = 4 codes possibles pour l'utilisateur, ayant un TTI disponible avec deux tranches d'avance sur le TTI des canaux HS-PDSCH et donc en particulier de celui sélectionné à l'étape (1).

Le module 100 détermine alors les informations à transmettre dans le TTI disponible sur le HS-SCCH choisi, et commande en conséquence le module 105 correspondant. Il positionne enfin le HI en fonction du code HS-SCCH sélectionné à l'étape (2) et fait insérer ce HI dans les symboles transmis sur le canal dédié, avec une avance juste suffisante par rapport au TTI du canal HS-SCCH (par exemple au plus une tranche avant).

La partie inférieure de la figure 3 montre les opérations inverses effectuées dans un terminal récepteur. En sortie du démodulateur 92 fonctionnant sur le PhCH sur lequel le HI est inséré, un démultiplexeur 110 extrait le symbole QPSK correspondant au HI aux instants appropriés et le fournit à un module d'évaluation 111. Celui-ci commande en fonction de la valeur du HI un sélecteur 112 afin de sélectionner l'un des K = 4 flux de sortie des modules de désétalement 94 du bloc 7 auxquels ont été alloués les codes des quatre HS-SCCH utilisables pour le terminal. Seul le flux sélectionné est alors démodulé et décodé par le module 113 afin d'obtenir les informations de signalisation transportées par le HS-SCCH. Ces informations de signalisation sont fournies à un module 115 de gestion du mode HSDPA dans le terminal, qui en déduit les paramètres nécessaires au fonctionnement :

- du ou des modules de désétalement 95 du bloc 7 auxquels sont alloués les codes HS-DSCH signalés sur le HS-SCCH ;

- du module de démodulation et de décodage 116 qui reçoit le flux de symboles désétalés correspondant et qui applique le traitement de réception approprié en fournissant les informations de contre-réaction requises (acquittement, ...).

Le module de gestion HSDPA 115 élabore les signaux UL à retourner sur le DPCCH montant à la station de base de la cellule à partir des informations de contre-réaction obtenues par le module 116. Il indique également aux modules de désétalement 94 quel est l'ensemble de K = 4 codes HS-SCCH utilisables parmi la liste de L codes qui lui a été indiquée par le RNC de desserte (SRNC, « Serving RNC ») à l'établissement de la session HSDPA. Ce SRNC est souvent confondu avec le CRNC supervisant la station de base. Il peut néanmoins aussi être un RNC distinct, communiquant avec le CRNC à travers l'interface dite Iur normalisée par le 3GPP.

Un vol de bits à une position fixe toutes les trois tranches pour y insérer le symbole contenant le HI peut poser un problème de dégradation du signal porté par le canal DPCH après décodage par le terminal. Les deux étapes de désentralecement $51_j$, $46_i$ effectuées dans le terminal modifient la position des symboles $r'_j$ reçus de telle sorte que des bits éloignés les uns des autres dans les tranches transmises peuvent se retrouver regroupés après désentrelacement. Ce regroupement fait qu'on risque d'avoir poinçonné plusieurs bits d'information consécutifs (jusqu'à 4 bits), et entraîne donc une dégradation significative des performances du décodage de canal $43_i$.

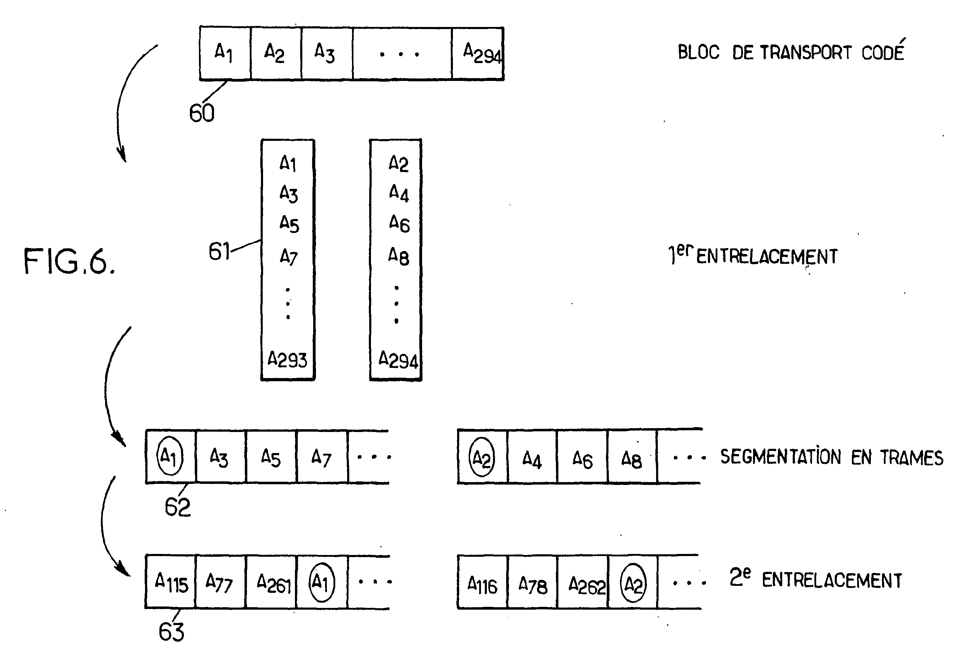

La figure 6 montre un exemple de bloc de transport 60 contenant 294 bits, notés $A_1$, $A_2$, $A_3$, ..., $A_{294}$, après codage de canal $23_i$ et adaptation de débit $24_i$. Conformément à ce qui a été décrit précédemment, le module d'entrelacement $26_i$ dans la station de base effectue une opération d'entrelacement sur ce bloc de transport 60. Elle revient à écrire par rangées dans une matrice à deux colonnes 61 la séquence de bits du bloc de transport 60. Le choix du nombre de colonnes (deux dans le présent cas) est fonction du TTI du bloc de transport 60. Dans l'exemple exposé, on considère un TTI de 20 millisecondes, de sorte que le bloc de transport 60 sera divisé en deux lors de la mise en trames du flux de bits transmis ($F_i$ = 2). L'entrelacement opéré par le module $26_j$ consiste alors à lire la séquence de bits initiale dans l'ordre des colonnes de la matrice 61 en commençant par la seconde colonne.

Lors de la segmentation des trames radio effectuée par le module $27_i$, on obtient alors des trames 62 telles que représentées sur la figure 6. La première trame du TTI contient les bits impairs de la séquence de bits initiale du bloc de transport 60, tandis que la seconde trame contient les bits pairs de cette séquence de bits. Il est donc apparent sur cette figure que des bits initialement voisins de la séquence contenue dans le bloc 60, tels que $A_1$ et $A_2$, se retrouvent, après la segmentation en trames, en des positions identiques dans chacune des deux trames constituées. Ensuite, la permutation appliquée par le second entrelaceur $31_j$ est la même pour chaque trame (indépendamment des détails de cette permutation), de sorte que les deux symboles consécutifs $A_1$, $A_2$ se retrouveront de nouveau en des positions identiques après ce second entrelaceur $31_j$ (trames 63 sur la figure 6) : il feront alors partie de symboles QPSK de même rang dans deux trames radio consécutives. Si le symbole QPSK ayant ce rang est perdu du fait de l'insertion d'un HI dans la première trame, il en sera de même de celui ayant le même rang dans la trame suivante en raison du poinçonnage effectué à une position fixe 15 tranches plus tard, soit avec un décalage 5 TTI du HS-SCCH. On voit alors qu'aucun des deux symboles consécutifs $A_1$, $A_2$ ne sera reçu par le terminal, ce qui diminue les performances du décodeur.

La figure 6 montre donc que, lorsque $F_i$ > 1, les caractéristiques du premier entrelaceur $26_i$ font que la substitution du HI en des positions fixes dans les tranches dégrade la réception des informations sur le canal dédié.

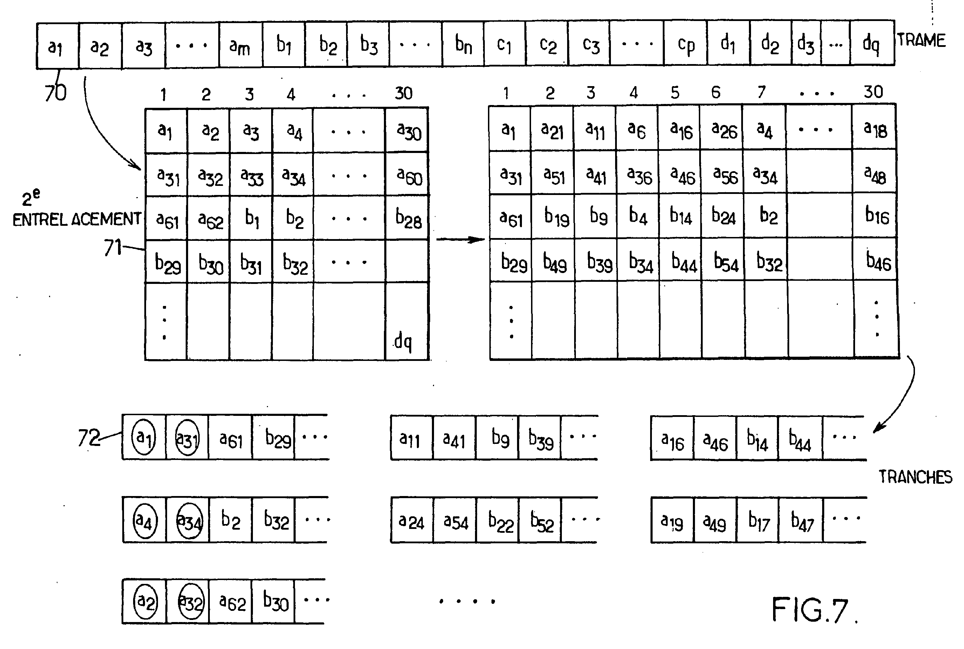

La figure 7 illustre quant à elle la structure du second entrelaceur $31_j$. La figure 7 présente une trame 70 à émettre sur un canal DPCH, constituée de bits d'information après multiplexage des canaux de transport (et segmentation par PhCH si Y > 1). Cette trame 70 est composée plusieurs groupes de bits, respectivement issus de canaux de transport (TrCH) différents, concaténés par le module 28 de la figure 4. Ces TrCH correspondent par exemple à des catégories de bits d'importance variable, issus d'un codeur de parole de type AMR (« Adaptive Multi-Rate »). On peut ainsi distinguer un premier groupe de bits $a_1$, $a_2$, $a_3$, ..., $a_m$ relevant d'un TrCH A, un second $b_1$, $b_2$, $b_3$, ..., $b_n$ relevant d'un TrCH B, un troisième groupe de bits $c_1$, $c_2$, $c_3$, ..., $c_p$ relevant d'un TrCH C, et un quatrième groupe de bits $d_1$, $d_2$, $d_3$, ..., $d_q$ relevant d'un TrCH D. La succession de ces groupes de bits résulte du multiplexage des canaux de transport par le module 28 à l'intérieur d'une trame de 10 millisecondes.

L'entrelacement intra-trame opéré par le module $31_j$ revient à écrire les bits de la trame 70 par rangées dans une matrice 71 de C2 = 30 colonnes. Le module $31_j$ lit ensuite la matrice 71, colonne par colonne, après permutation des 30 colonnes de cette matrice. Le flux de bits résultant est ensuite positionné dans les tranches à transmettre sur les canaux physiques, à raison de deux bits par symbole QPSK. Comme le nombre de colonnes de la matrice 71 (C2 = 30) est le double du nombre de tranches par trame (N = 15), les symboles d'une tranche correspondent à deux colonnes adjacentes de la matrice après permutation des colonnes. La partie inférieure de la figure 7 montre le contenu des sept premières tranches 72 de la trame dans un cas où on a m = 62 bits dans le TrCH A. Si on poinçonne un symbole QPSK de même position tous les trois tranches (par exemple le premier symbole correspondant aux deux premiers bits entourés à la partie inférieure de la figure 7), on voit qu'on tombe presque toujours dans les bits issus du même TrCH, à savoir le TrCH A dans l'exemple dessiné, duquel les bits $a_1$, $a_{31}$, $a_4$, $a_{34}$, $a_2$, $a_{32}$, $a_5$, $a_{35}$, $a_{13}$, $a_{43}$ seront perdus.

La figure 7 montre donc que les tranches ainsi constituées ne permettent pas de distribuer de façon aléatoire les bits en fonction de leur TrCH d'origine. Il en résulte un déséquilibre de traitement considérable entre les TrCH, qui ne peut que dégrader la qualité de service.

De plus, dans le ou les TrCH ainsi défavorisés, la probabilité de poinçonner deux bits voisins dans le flux de sortie du codeur de canal $23_i$ est augmentée. Cet effet négatif est accentué par celui mis en évidence par l'illustration de la figure 6 lorsqu'il y a plusieurs trames dans le TTI.

Pour pallier ces inconvénients, on fait varier d'une tranche à une autre la position des symboles poinçonnés et remplacés par des HI. Il en résulte :

- une meilleure répartition des bits poinçonnés entre les TrCH lorsque le PhCH comporte des contributions de plusieurs TrCH (cf. figure 7) ;

- une meilleure répartition des bits poinçonnés dans le flux de sortie du codeur de canal $23_i$ lorsqu'il y a plusieurs trames par TTI, c'est-à-dire lorsque $F_i > 1$ (cf. figure 6).

De très nombreux choix de position variable des symboles volés dans les trames et les tranches peuvent être faits pour répondre à ces critères. Par exemple, une permutation circulaire des positions des symboles volés est effectuée sur certaines tranches à chaque trame. Autrement dit, les positions de cinq symboles volés sont les mêmes d'une trame à l'autre, mais ne sont pas appliquées aux mêmes tranches. Dans un autre exemple, la position des symboles volés n'est plus conservée d'une trame à l'autre, mais est translatée d'un symbole pour chaque tranche.

Pour signaler au terminal l'ensemble de K = 4 codes HS-SCCH qu'elle a sélectionné pour lui, la station de base utilise également le canal dédié. Néanmoins, cette information de signalisation n'a généralement pas besoin d'être mise à jour aussi rapidement que le HI.

A titre d'exemple, une modification de l'ensemble de K = 4 codes HS-SCCH sélectionné pour un terminal peut être opérée dans le cadre d'une reconfiguration des ressources internes, matérielles et/ou logicielles, de la station de base, notamment lorsque celle-ci a une architecture modulaire.

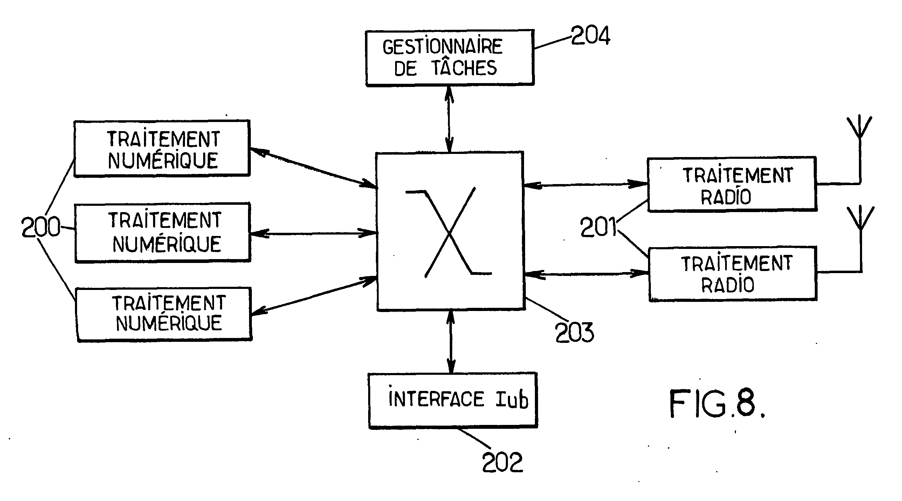

La figure 8 illustre un exemple d'architecture matérielle de la station de base. Cette architecture est modulaire en ce qui concerne les traitements numériques opérés dans les canaux de communication, notamment le codage et le multiplexage des canaux. Dans cet exemple, la station de base est composée de :

- plusieurs modules 200 de traitement numérique de flux d'informations (trois modules dans l'exemple dessiné) dont un des rôles principaux, pour les canaux dédiés, est d'assurer le codage et le multiplexage de flux de transport et la mise en forme des canaux physiques de la manière expliquée en référence à la figure 4. Un autre rôle est d'effectuer l'étalement des signaux par les codes de « chanellisation » et de brouillage. Pour les canaux montants, le module 200 assure les traitements inverses de désétalement, démodulation, démultiplexage et décodage ;

- un ou plusieurs modules 201 de traitement radio (deux modules dans l'exemple dessiné) qui mettent en forme les signaux issus des modules de traitement numérique 200 et les transposent sur la fréquence porteuse en assurant les traitement radio requis pour attaquer une ou plusieurs antennes. Dans le sens montant, le module 201 assure les traitements inverses de filtrage, transposition et numérisation ;

- un module 202 d'interface avec le CRNC qui supervise la station de base. Ce module 202 fonctionne conformément à l'interface *lub* ;

- une plate-forme de commutation 203 qui aiguille les flux de données entre les modules 200, 201 et 202 ;

- un gestionnaire de tâches 204, dialoguant avec les autres modules à travers la plate-forme de commutation 203, dont un rôle principal est de répartir l'ensemble des traitements à effectuer entre les différents modules de la station de base. Ce gestionnaire de tâches 204 affecte notamment aux modules de traitement numérique 200 les canaux de transport, et les canaux physiques correspondants, dont ils doivent s'occuper.

Pour la fonctionnalité HSDPA, un ou plusieurs des modules de traitement numérique 200 doivent comporter les organes 100-108 illustrés par la figure 2, en particulier l'instance MAC (qui peut néanmoins être en partie exécutée dans le gestionnaire 204). Un tel module 200 se verra donc affecter par le gestionnaire 204 un ou plusieurs codes HS-PDSCH et des codes HS-SCCH associés. Ces codes HS-SCCH correspondent typiquement à un des ensembles de K codes parmi la liste de L codes qui a été allouée à la station de base par son CRNC. Le gestionnaire HSDPA 100 de ce module 200 opérera donc sa sélection du code HS-SCCH, indiqué par le HI, parmi l'ensemble de K codes qui a été affecté à ce module 200.

Il est souhaitable, pour optimiser le fonctionnement de la station de base, que le canal dédié utilisé pour transmettre le HI à un terminal donné ne soit pas traité par un module 200 différent de celui qui assure les traitements HSDPA pour ce terminal (HS-SCCH et HS-DSCH). La même observation s'applique au canal dédié DPCCH-HS par lequel le terminal remonte les informations de contre-réaction. Ne pas prendre cette précaution conduit à charger inutilement les interfaces entre la plate-forme de commutation 203 et les modules 200 pour échanger les informations de façon très rapide entre différents modules 200. Plus généralement, il est préférable que la totalité des canaux concernant un terminal donné soit traitée par le même module 200. Cela permet de réduire les temps de traitement et les problèmes liés à la synchronisation de ces traitements.

Dans l'illustration de la figure 8, les modules de traitement numérique 200 sont des modules matériels, consistant par exemple chacun en un ou plusieurs cartes électroniques. On notera que les mêmes problèmes se posent s'il s'agit de modules logiciels, les interfaces qu'on souhaite éviter de surcharger étant alors des interfaces logicielles entre processus.

Pour optimiser l'usage des ressources de traitement dans la station de base, le gestionnaire 204 peut donc être amené à réaffecter les ressources utilisées pour un terminal donné, et en particulier à basculer ce terminal d'un module 200 vers un autre. Ceci donne lieu à un transfert de l'instance MAC HSDPA vers un autre module 200 et à une modification des codes HS-SCCH et HS-DSCH qui seront utilisés pour le terminal. La modification des codes HS-DSCH ne pose aucun problème puisque ceux-ci sont indiqués explicitement dans le TFRI transmis sur le HS-SCCH. En revanche, la station de base doit informer le terminal de la modification de l'ensemble de K codes HS-SCCH.

Une telle réaffectation des ressources de traitement de la station de base peut être initiée par le gestionnaire de tâches 204 en fonction de l'évolution de la charge dans la cellule desservie, par exemple si le terminal concerné (ou un autre terminal traité par le même module 200) a besoin d'un surcroît de ressources qui n'est plus disponible dans ce module. En général, il n'y aura pas lieu de rendre compte au CRNC ou au SRNC de ces réaffectations de canaux.

La liste de L = 16 canaux HS-SCCH allouée par le CRNC à la station de base lui est initialement signifiée par l'intermédiaire de l'interface *lub*, au moyen du protocole NBAP (« Node B Application Part », voir spécification technique 3GPP TS 25.433, version 4.2.0, Release 4, publiée en septembre 2001). A l'établissement de la session HSDPA avec le terminal, le SRNC indique cette liste au terminal (qu'il a obtenue à travers l'interface *lur* s'il n'est pas confondu avec le CRNC), au moyen du protocole RRC (« Radio Resource Control », voir spécification technique 3GPP TS 25.331, version 4.2.1, Release 4, publiée en septembre 2001).

L'indication de l'ensemble de K canaux HS-SCCH à prendre en compte par le terminal peut a priori être faite à n'importe quel moment déterminé par la station de base. On prend ici l'hypothèse qu'elle est faite de façon périodique. Dans ce cas, les nouveaux canaux HS-SCCH pourront être utilisés dès la prochaine période de mise à jour de cette indication, qu'on nomme ici période T. La période T en question dépend de la périodicité à laquelle on souhaite pouvoir effectuer la modification des ressources. Elle doit être un multiple de trois tranches temporelles de 666 $\mu$s, pour être synchronisée avec le TTI des HS-DSCH et des HS-SCCH. En général, la gestion des ressources matérielles et/ou logicielles de la station de base ne nécessite pas de modifications trop fréquentes, de sorte qu'on peut se dispenser d'effectuer un tel changement et donc de l'indiquer au terminal toutes les trois tranches temporelles.

A titre d'exemple, cette période T peut être fixée à 80 ms. L'indication faite au terminal peut requérir une transmission simple de l'information pendant cette période, ce qui correspond à la transmission d'un faible nombre de symboles, ou bien, de préférence, une transmission redondante de cette information, ce qui augmente le nombre de symboles porteurs de l'information qui seront transmis au terminal pendant la période T. Des exemples d'un tel codage seront décrits ultérieurement.

Pendant la période T courante, le gestionnaire HSDPA 100 du module 200 traitant les canaux associés au terminal insère une indication HSI des canaux HS-SCCH qui vont être utilisés lors de la prochaine période T. En l'absence de reconfiguration des ressources de la station de base, cette indication désigne l'ensemble de K = 4 codes HS-SCCH gérés dans ce module 200. En présence d'une reconfiguration des ressources conduisant à transférer le terminal vers un autre module 200 de la station de base, cette indication désigne l'ensemble de K = 4 codes HS-SCCH gérés dans cet autre module.

Dans notre cas particulier où K = 4 et L = 16, l'indication HSI peut porter sur deux bits. Pour prendre en compte un certain nombre de cas de figure possibles, on peut prévoir que cette indication soit représentée sur davantage de bits, par exemple 5 bits.

Le cas particulier où L = 16 avec des ensembles disjoints de K = 4 canaux n'est qu'une illustration de l'invention. Dans la pratique, les ensembles composant la liste de canaux partagés allouée à la station de base peuvent avoir le même nombre de canaux K ou des nombres de canaux différents. Ils peuvent aussi présenter des chevauchements, certains codes de la liste pouvant appartenir à plusieurs de ces ensembles.

Il sera observé que le procédé selon l'invention peut s'appliquer à un contrôle de canaux de communication partagés utilisés par une station de base dont l'architecture n'est pas nécessairement modulaire. D'autres considérations peuvent en effet faire rechercher la souplesse de gestion des canaux que procure la capacité pour la station de base de sélectionner les codes HS-SCCH affectés à un terminal donné sans être contrainte par une allocation que le RNC aurait faite spécialement pour ce terminal. Par exemple, on peut envisager que la liste des canaux HS-SCCH allouée à une station de base comporte plusieurs ensembles de canaux ayant des facteurs d'étalement différents et que la station de base sélectionne l'un de ces ensembles en tenant compte des bits de contrôle de puissance remontés par le terminal pour asservir la puissance d'émission sur le HS-SCCH : si un seuil haut ou bas de puissance est atteint sur le HS-SCCH, la station de base pourrait choisir de faire varier le facteur d'étalement sur la prochaine période T, et donc de changer l'ensemble de codes HS-SCCH dans la liste qui lui est allouée, sans avoir à en référer au CRNC ou au SRNC. Le HSI permet de signaler de tels changements au terminal.

Dans un premier mode de réalisation de l'invention, l'insertion de l'indication HSI est effectuée par un mécanisme de vol de symboles semblable à celui décrit précédemment pour l'insertion du HI, de préférence après application d'un codage redondant à cette indication HSI.

Le gestionnaire HSDPA 100 fournit alors les symboles correspondant au HSI, que le multiplexeur 108 substitue à des symboles déterminés (figure 2) délivrés par le module de multiplexage 2 pour un DPCH destiné au terminal. Au niveau du terminal (figure 3), le démultiplexeur 110 extrait du flux de symboles démodulés reçu sur ce DPCH les symboles qui correspondent au HSI et les adresse à une unité d'évaluation 120. Celle-ci décode les symboles extraits au cours de la période T, en corrigeant d'éventuelles erreurs de transmission, pour récupérer le HSI adressé au gestionnaire HSDPA 115, lequel affecte les codes correspondants aux modules de désétalement 94 pour la période T suivante.

Il est à noter que l'indication HSI peut être transmise avec ou sans l'indication HI précédemment discutée. Il est envisageable de ne pas transmettre le HI si les terminaux peuvent décoder les K = 4 canaux HS-SCCH indiqués par le HSI sans que cela pénalise trop leur consommation électrique. On peut alors voler des symboles QSPK sur le DPCH pour transmettre le HSI plutôt que le HI.

Si le HI est utilisé, les positions des symboles volés, pour y insérer le HSI la prochaine période T, doit tenir compte de la position des symboles volés pour y insérer le HI, sous peine de dégrader les performances de la chaîne de transmission du fait de l'effet des deux entrelaceurs, comme expliqué en référence aux figures 6 et 7.

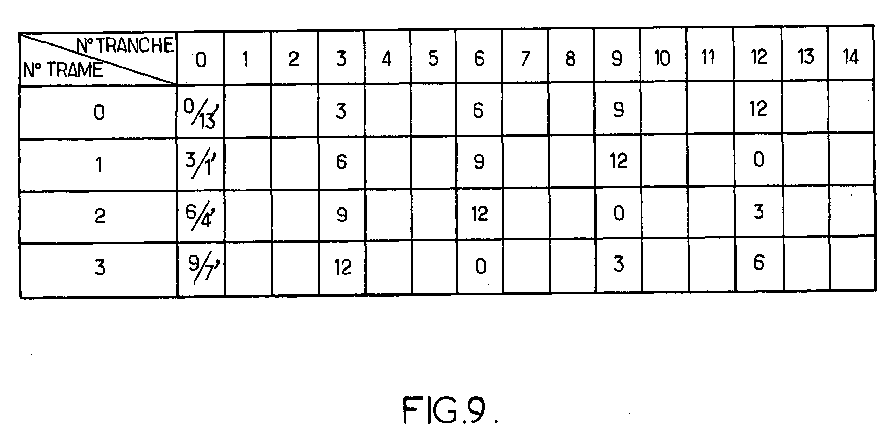

La figure 9 montre un exemple d'une fonction de distribution des symboles volés dans le cas d'un TTI de 40 ms ($F_i$ = 4) sur le DPCH, le HI faisant l'objet d'un vol de cinq symboles QPSK par trame, et le HSI faisant l'objet d'un vol d'un symbole QPSK par trame. Elle représente un tableau indiquant, pour les quatre trames indexées de 0 à 3, le numéro des symboles QPSK volés dans chaque tranche émise par la station de base. Les symboles volés pour le HI dans la première trame ont respectivement les positions 0, 3, 6, 9 et 12 dans les tranches numérotées 0, 3, 6, 9 et 12. Ceci évite le problème évoqué ci-dessus en référence à la figure 7 relativement au déséquilibre de traitement des TrCH multiplexés. Pour la trame suivante, on applique une permutation circulaire à ces positions de symboles, de sorte que les symboles de positions 3, 6, 9, 12 et 0 sont respectivement volés dans les tranches numérotées 0, 3, 6, 9 et 12. La même permutation circulaire est appliquée pour déterminer les positions de vol dans les trames suivantes. Cette permutation circulaire évite le problème évoqué ci-dessus en référence à la figure 6 relativement aux dégradations de performances du décodeur de canal dues au premier entrelaceur lorsque $F_i$ > 1. Dans les tranches intermédiaires numérotées 1, 2, 4, 5, 7, 8, 10, 11, 13 et 14, aucun symbole QPSK n'est volé dans cet exemple. La position des symboles volés suit le même schéma que pour les quatre premières trames représentées, pour les quatre trames suivantes. L'indication HSI requiert le vol d'un symbole QPSK par trame, ce qui correspond à 16 bits par période T de 80 ms.

Dans l'exemple de la figure 9, les positions choisies pour les symboles volés ont respectivement les numéros 13, 1, 4 et 7 sur la tranche 0 de chaque trame. Les numéros de ces positions ont été primés sur la figure de manière à les distinguer des symboles volés pour le HI. La position des symboles volés suit le même schéma que pour les quatre premières trames représentées, pour les quatre trames suivantes. Ainsi, tous les symboles volés, que ce soit pour le HI ou pour le HSI, ont des positions différentes pour une même tranche sur des trames successives, ce qui évite le problème du premier entrelaceur exposé plus haut. En outre, les positions de tous les symboles volés varient également d'une tranche à la suivante sur une même trame, de sorte qu'on se prémunit contre les effets négatifs du second entrelaceur.

En variante, les symboles volés pour le HSI sont dans une tranche temporelle de la trame qui n'a pas fait l'objet d'un vol de symbole pour le HI, par exemple dans la tranche 1 dans l'illustration de la figure 9.

Le même motif des positions de substitution des symboles représentant le HSI peut être appliqué si le HI n'est pas transmis.

De préférence, les symboles QPSK correspondant au HSI et/ou au HI, sont émis par la station de base avec une puissance d'émission plus importante que les autres symboles d'information. Dans ce cas, le terminal destinataire peut lire ces symboles de façon fiable avant de décoder les flux d'information reçus, en limitant le risque d'erreur. Cependant l'augmentation de la puissance pour ces symboles n'est pas indispensable, notamment dans le cas où le HSI est transmis avec un codage redondant.

Différents codages de l'information HSI sont envisageables et résultent en un nombre de symboles plus ou moins grand à voler dans le flux de symboles porté par le canal DPCH dédié au terminal. On peut envisager de transmettre l'indication de façon brute, c'est-à-dire sans redondance. Dans ce cas, un faible nombre de symboles suffit pour une période T.

De préférence, on code le HSI de manière à fiabiliser sa réception par le terminal.

Dans une réalisation particulière, l'indication HSI peut être représenté par 5 bits avant codage, et on code cette information de manière à ce qu'elle fasse l'objet d'un symbole par trame radio sur une période T de 80 ms. Dans ce cas, le nombre de bits à voler sur le flux du DPCH correspondant à la période T est de 16 (= 8 trames x 2 bits pour un symbole QPSK). Un codage possible est le codage bi-orthogonal (16,5) décrit dans la section 4.3.3 de la spécification technique 3G TS 25.212 précitée. Un vol de 16 bits est donc réalisé suivant ce codage par la station de base, par exemple selon des positions illustrées sur la figure 9. Le module d'évaluation 120 du terminal décode les 16 bits porteurs de l'information et en déduit le HSI désignant l'ensemble de HS-SCCH sélectionné, qu'il doit éventuellement lire à la prochaine période T.

On peut utiliser le même codage pour le HSI en volant deux symboles QPSK par trame radio sur une période T de 40 ms, ce qui correspond à 16 bits (= 4 trames x 2 x 2 bits par symbole QPSK), avec ou sans vol supplémentaire pour le HI.

Si l'on souhaite transmettre le HSI à raison de deux symboles par trame sur une période T de 80 ms, on peut utiliser un codage de l'information sur 32 bits (= 8 trames x 2 x 2 bits par symbole QPSK). Le codage bi-orthogonal (32,10) décrit dans la section 4.3.3 de la spécification technique 3G TS 25.212 précitée peut répondre à ce besoin.

Si le HI n'est pas transmis, il est également envisageable de coder le HSI à raison d'un symbole par TTI HSDPA (TTI du HS-DSCH et des HS-SCCH), c'est-à-dire toutes les 2 ms. Pour une trame, cela correspond à un total de 10 bits (=10/2×2 bits par symbole QPSK). Si le HSI avant codage ne requiert que 3 bits, on peut utiliser un codage (10, 3) tel que par exemple celui décrit dans le rapport technique 3G TR 25.870, version 1.1.0, publié en novembre 2001 par le 3GPP. A titre d'exemple, les positions des 5 symboles QPSK volés dans une trame peuvent être celles indiquées pour le HI sur la figure 9.

Quand le HI est transmis, il convient de le prendre en compte lors du vol de symboles réalisé sur le DPCH concerné pour transmettre le HSI. Compte tenu de la faible période de vol pour le HI (un symbole par TTI HSDPA, soit 2 bits toutes les 2 ms), le codage du HSI est de préférence fait sur un faible nombre de bits. On peut par exemple le transmettre en volant un symbole toutes les 2 trames radio sur une période T de 80 ms, ce qui correspond à 8 (= 80 / (10x2) x 2) bits volés sur une période de 80 ms. A cet effet et si le HSI requiert 2 bits seulement avant codage, on peut utiliser un codage (7,2) tel que décrit dans le rapport technique 3G TR 25.870 précité, et un répétant un des sept bits codés.

Le codage (16,5) précité dans le cadre d'un vol d'un symbole par trame sur une période de 80 ms peut également être utilisé pour le HSI de façon avantageuse en présence du HI, puisque la période d'un tel vol est suffisamment faible pour ne pas dégrader significativement les performances de la chaîne de réception.

On peut encore citer l'exemple d'un vol d'un symbole tous les deux TTI HSDPA pour le HSI en présence du HI. Cela correspond à un vol de 20 bits sur une période T de 40 ms (soit 40 / (2×2) × 2). Dans ce cas, un codage (10,3) tel qu'évoqué plus haut peut être utilisé en répétant une fois chaque bit codé. Pour une période T de 80 ms, le même codage (10,3) convient en répétant trois fois chaque bit codé.

Dans un second mode de réalisation de l'invention, l'insertion de l'indication HSI sur le canal dédié descendant est effectuée par le biais d'un codage spécifique d'un champ de données présent sur le DPCCH de ce canal dédié. Ce champ est typiquement celui réservé à la transmission du TFCI. Le TFCI est transmis au terminal à raison de quelques bits par tranche de 666 µs sur la durée d'une trame radio de 10 ms, avec un codage redondant pour le protéger contre les erreurs de transmission. Il est possible d'ajouter des états possibles en entrée de ce codage afin de transmettre une information supplémentaire. Par exemple, en doublant le nombre d'états, on peut insérer un bit de signalisation par trame, qui peut être exploité pour transmettre le HSI sur une période T de n trames si le HSI se compose de n bits.

Ce second mode de réalisation de l'invention permet aussi la transmission du HSI soit seul soit accompagné d'un HI transmis par le mécanisme précédent de vol de symboles.

Bien sûr, l'invention ne se limite pas aux cas d'application décrits précédemment à titre d'illustration. Le procédé selon l'invention est d'autre part applicable à des systèmes autres que le HSDPA ou l'UMTS.

**Revendications**

**1.** Procédé de contrôle de canaux de communication entre une station de base et des terminaux, incluant des canaux partagés par les terminaux pour communiquer avec ladite station de base et au moins un canal dédié de la station de base vers l'un des terminaux, le procédé comprenant les étapes suivantes :

- allouer à la station de base une liste de canaux partagés composée de plusieurs ensembles de canaux partagés ;
- pour une session de communication entre la station de base et ledit terminal, indiquer au terminal, depuis un organe de contrôle, la liste de canaux partagés allouée à la station de base ; et
- au niveau de la station de base, sélectionner pour le terminal l'un des ensembles de canaux partagés et, indépendamment de l'organe de contrôle, indiquer l'ensemble sélectionné au terminal par l'intermédiaire dudit canal dédié.

**2.** Procédé selon la revendication 1, dans lequel la sélection de l'un des ensembles de canaux partagés pour le terminal est opérée en réponse à une commande de configuration de ressources de traitement (200) dans la station de base.

**3.** Procédé selon la revendication 2, dans lequel lesdites ressources de traitement de la station de base comportent plusieurs modules (200) auxquels sont affectés des traitements relatifs à des groupes de canaux respectivement associés auxdits modules, et dans lequel chaque ensemble de canaux partagés utilisé par la station de base est inclus dans le groupe associé à un des modules.

**4.** Procédé selon la revendication 3, dans lequel l'ensemble de canaux partagés indiqué au terminal est sélectionné par la station de base de façon à faire partie du même groupe de canaux, associé à l'un des modules, que ledit canal dédié.

**5.** Procédé selon la revendication 4, dans lequel l'ensemble de canaux partagés indiqué au terminal est sélectionné par la station de base de façon à faire partie du même groupe de canaux que chaque canal dédié établi avec ledit terminal.

**6.** Procédé selon l'une quelconque des revendications précédentes, dans lequel ladite liste de canaux partagés allouée à la station de base est composée de canaux de signalisation depuis la station de base vers les terminaux.

**7.** Procédé selon la revendication 6, dans lequel lesdits canaux partagés comportent en outre au moins un canal de trafic depuis la station de base vers les terminaux, et dans lequel les canaux de signalisation partagés de la liste allouée sont prévus pour transmettre des informations servant à la réception par les terminaux du trafic porté par les canaux de trafic partagés.

**8.** Procédé selon l'une quelconque des revendications précédentes, dans lequel ledit ensemble sélectionné est indiqué au terminal de manière redondante.

**9.** Procédé selon l'une quelconque des revendications précédentes, dans lequel ledit canal dédié porte un flux de symboles à destination du terminal et dans lequel ledit ensemble sélectionné est indiqué au terminal en modifiant la valeur d'au moins un symbole dudit flux.

**10.** Procédé selon la revendication 9, dans lequel ledit ensemble sélectionné est indiqué périodiquement au terminal.

**11.** Procédé selon la revendication 9 ou 10, dans lequel la station de base comprend en outre au moins un module d'entrelacement de symboles transmis sur ledit canal dédié, agissant sur une période d'entrelacement, dans lequel on modifie, après entrelacement, la valeur d'au moins deux symboles dudit flux de symboles à l'intérieur d'une période d'entrelacement, et dans lequel on choisit la position desdits symboles de manière à ce que des symboles correspondants auxdits symboles avant entrelacement soient dispersés au sein du flux de symboles.

**12.** Procédé selon l'une quelconque des revendications 9 à 11, dans lequel on indique périodiquement une seconde information au terminal, en modifiant la valeur d'au moins un symbole dudit flux porté par le canal dédié, dans lequel on choisit la position des symboles dont on modifie la valeur, indifféremment pour l'indication au terminal dudit ensemble sélectionné et de ladite seconde information, de manière à ce que des symboles correspondants auxdits symboles avant entrelacement soient dispersés au sein du flux de symboles.

**13.** Procédé selon la revendication 12, dans lequel ladite seconde information comprend un identifiant (HI) d'au moins un des canaux partagés dudit ensemble sélectionné.

**14.** Procédé selon l'une quelconque des revendications 9 à 13, dans lequel les symboles dont on modifie la valeur sont transmis avec une puissance d'émission supérieure aux autres symboles du flux de symboles sur ledit canal dédié.

**15.** Procédé selon l'une quelconque des revendications précédentes, dans lequel les ensembles composant la liste de canaux partagés allouée à la station de base ont le même nombre de canaux.

**16.** Procédé selon l'une quelconque des revendications 1 à 14, dans lequel certains au moins des ensembles composant la liste de canaux partagés allouée à la station de base ont des nombres de canaux différents.

**17.** Procédé selon l'une quelconque des revendications précédentes, dans lequel les ensembles composant la liste de canaux partagés allouée à la station de base sont disjoints.

**18.** Procédé selon l'une quelconque des revendications 1 à 16, dans lequel certains au moins des ensembles composant la liste de canaux partagés allouée à la station de base ont des canaux en commun.

19. Station de base pour un système de communication avec des terminaux, comprenant :

   - des moyens pour obtenir, en liaison avec un organe de contrôle, une liste de canaux partagés allouée à la station de base et composée de plusieurs ensembles de canaux partagés ;
   - des moyens pour sélectionner, pour l'un des terminaux, l'un des ensembles de canaux partagés ; et
   - des moyens pour indiquer audit terminal par l'intermédiaire d'un canal dédié, indépendamment de l'organe de contrôle, quel ensemble est sélectionné parmi la liste allouée à la station de base.

20. Station de base selon la revendication 19, comprenant plusieurs modules (200) auxquels sont affectés des traitements relatifs à des groupes de canaux respectivement associés auxdits modules, et dans laquelle chaque ensemble de canaux partagés utilisé par la station de base est inclus dans le groupe associé à un des modules.

21. Station de base selon la revendication 20, dans laquelle les moyens de sélection de l'ensemble de canaux partagés indiqué au terminal sont agencés pour que ledit ensemble soit inclus dans le même groupe de canaux, associé à l'un des modules, que ledit canal dédié.

22. Station de base selon la revendication 21, dans laquelle les moyens de sélection de l'ensemble de canaux partagés indiqué au terminal sont agencés pour que ledit ensemble soit inclus dans le même groupe de canaux que chaque canal dédié établi avec ledit terminal.

23. Station de base selon l'une quelconque des revendications 19 à 22, dans laquelle ladite liste de canaux partagés allouée à la station de base est composée de canaux de signalisation depuis la station de base vers les terminaux.

24. Station de base selon la revendication 23, dans laquelle les canaux de signalisation partagés de la liste allouée sont prévus pour transmettre des informations servant à la réception par des terminaux de trafic porté par des canaux de trafic partagés depuis la station de base vers les terminaux.

25. Station de base selon l'une quelconque des revendications 19 à 24, dans laquelle les moyens pour indiquer l'ensemble sélectionné au terminal sont agencés pour indiquer ledit ensemble sélectionné de manière redondante.

26. Station de base selon l'une quelconque des revendications 19 à 25, dans laquelle ledit canal dédié porte un flux de symboles à destination du terminal, et dans laquelle les moyens pour indiquer l'ensemble sélectionné au terminal sont agencés pour indiquer ledit ensemble sélectionné en modifiant la valeur d'au moins un symbole dudit flux.

27. Station de base selon la revendication 26, comprenant des moyens pour indiquer périodiquement au terminal ledit ensemble sélectionné.

28. Station de base selon la revendication 26 ou 27, comprenant en outre au moins un module d'entrelacement de symboles transmis sur ledit canal dédié, agissant sur une période d'entrelacement, des moyens pour modifier, après entrelacement, la valeur d'au moins deux symboles dudit flux de symboles à l'intérieur d'une période d'entrelacement, et des moyens pour choisir la position desdits symboles de manière à ce que des symboles correspondants auxdits symboles avant entrelacement soient dispersés au sein du flux de symboles.

29. Station de base selon l'une quelconque des revendications 26 à 28, comprenant des moyens pour indiquer périodiquement une seconde information au terminal, en modifiant la valeur d'au moins un symbole dudit flux porté par le canal dédié, et des moyens pour choisir la position des symboles dont on modifie la valeur, indifféremment pour l'indication au terminal dudit ensemble sélectionné et de ladite seconde information, de manière à ce que des symboles correspondants aux dits symboles avant entrelacement soient dispersés au sein du flux de symboles.

30. Station de base selon la revendication 29, dans laquelle ladite seconde information est un identifiant (HI) d'au moins un des canaux partagés dudit ensemble sélectionné.

31. Station de base selon l'une quelconque des revendications 26 à 30, comprenant des moyens pour transmettre les symboles dont on modifie la valeur avec une puissance d'émission supérieure aux autres symboles du flux de symboles sur ledit canal dédié.

**32.** Terminal pour un système de communication comprenant au moins une station de base et un organe de contrôle et utilisant des canaux partagés avec d'autres terminaux pour communiquer avec la station de base et au moins un canal dédié de la station de base vers ledit terminal, le terminal comprenant :

  - des moyens pour recevoir de l'organe de contrôle une liste de canaux partagés allouée à la station de base, composée de plusieurs ensembles de canaux partagés, pour une session de communication avec la station de base ; et
  - des moyens pour recevoir de la station de base, par l'intermédiaire dudit canal dédié, une indication d'un des ensembles de canaux partagés sélectionné par la station de base pour ledit terminal.

**33.** Terminal selon la revendication 32, dans lequel ladite liste de canaux partagés est composée de canaux de signalisation depuis la station de base vers ledit terminal et vers les autres terminaux.

**34.** Terminal selon la revendication 33, dans lequel lesdits canaux partagés comportent en outre au moins un canal de trafic depuis la station de base vers ledit terminal et vers les autres terminaux, et dans lequel les canaux de signalisation partagés de la liste allouée sont prévus pour transmettre des informations servant à la réception par les terminaux du trafic porté par les canaux de trafic partagés.

**35.** Terminal selon l'une quelconque des revendications 32 à 34, dans lequel ledit ensemble sélectionné est reçu de manière redondante.

**36.** Terminal selon l'une quelconque des revendications 32 à 35, dans lequel ledit canal dédié porte un flux de symboles à destination du terminal et comprenant des moyens pour déduire dès la réception dudit flux, ledit ensemble sélectionné en extrayant au moins un symbole ayant une position prédéterminée dans le flux de symboles reçu.

**37.** Terminal selon la revendication 36, comprenant en outre au moins un module de désentrelacement de symboles reçus sur ledit canal dédié, agissant sur une période de désentrelacement, et des moyens pour extraire, avant désentrelacement, au moins deux symboles appartenant à des tranches temporelles distinctes séparées par une période fixe dudit flux de symboles à l'intérieur d'une période d'entrelacement, lesdits symboles extraits ayant une position prédéterminée variable entre deux tranches temporelles successives contenant lesdits symboles.

**38.** Terminal selon la revendication 36 ou 37, comprenant en outre des moyens pour recevoir une seconde information avec une période de vol et des moyens pour extraire au moins deux symboles dudit flux porté par le canal dédié, indifféremment pour l'indication au terminal dudit ensemble sélectionné et de ladite seconde information, lesdits symboles extraits ayant une position prédéterminée.

**39.** Terminal selon la revendication 38, dans lequel ladite seconde information est un identifiant (HI) d'au moins un des canaux partagés dudit ensemble sélectionné.

**Claims**

**1.** A method for controlling communication channels between a base station and terminals, including channels shared by the terminals to communicate with said base station and at least one dedicated channel from the base station to one of the terminals, which method comprises the following steps:

  - allocating to the base station a list of shared channels made up of multiple sets of shared channels;
  - for a communication session between the base station and said terminal, indicating to the terminal, from a control unit, the list of shared channels allocated to the base station; and
  - within the base station, selecting for the terminal one of the sets of shared channels and, independently of the control unit, indicating the selected set to the terminal by means of said dedicated channel.

**2.** A method according to claim 1, wherein the selecting of one of the sets of shared channels for the terminal is performed in response to a processing resource configuration command (200) within the base station.

**3.** A method according to claim 2, wherein said processing resources of the base station comprise multiple modules (200) to which are assigned the processes related to groups of channels respectively associated with said modules, and wherein each set of shared channels used by the base station is included in the group associated with one of the modules.

4. A method according to claim 3, wherein the set of shared channels indicated to the terminal is selected by the base station in such a way as to form part of the same group of channels, associated with one of the modules, as said dedicated channel.

5. A method according to claim 4, wherein the set of shared channels indicated to the terminal is selected by the base station in such a way as to form part of the same group of channels as each dedicated channel established with said terminal.

6. A method according to any one of the preceding claims, wherein said shared channels list allocated to the base station is made up of signal channels from the base station to the terminals.

7. A method according to claim 6, wherein said shared channels further comprise at least one traffic channel from the base station to the terminals, and wherein the allocated list's shared signal channels are operative to transmit information enabling the terminals to receive the traffic carried by the shared traffic channels.

8. A method according to any one of the preceding claims, wherein said selected set is redundantly indicated to the terminal.

9. A method according to any one of the preceding claims, wherein said dedicated channel carries a stream of symbols to the terminal, and wherein said selected set is indicated to the terminal while modifying the value of at least one symbol of said stream.

10. A method according to claim 9, wherein said selected set is periodically indicated to the terminal.

11. A method according to claim 9 or 10, wherein the base station further comprises at least one module for interlacing the symbols transmitted on said dedicated channel, acting on an interlacing period, in which, after interlacing, the value of at least two symbols of said stream of symbols is modified within an interlacing period, and wherein the positions of said symbols are chosen in such a way that symbols corresponding to said symbols before interlacing are dispersed within the stream of symbols.

12. A method according to any one of the claims 9 to 11, wherein a second piece of information is periodically indicated to the terminal, while modifying the value of at least one symbol of said stream carried by the dedicated channel, wherein the positions of the symbols whose values are being modified are chosen, either for the indicating of said selected set or said second piece of information to the terminal, so that the symbols corresponding to said symbols before interlacing are dispersed within the stream of symbols.

13. A method according to claim 12, wherein said second piece of information comprises an identifier (HI) of at least one of the shared channels of said selected set.

14. A method according to any one of the claims 9 to 13, wherein the symbols whose values are modified are transmitted with a transmission power greater than the other symbols of the stream of symbols on said dedicated channel.

15. A method according to any one of the preceding claims, wherein the sets that make up the list of shared channels allocated to the base station have the same number of channels.

16. A method according to any one of the claims 1 to 14, wherein at least some of the sets that make up of the list of shared channels allocated to the base station have different numbers of channels.

17. A method according to any one of the preceding claims, wherein the sets that make up of the fist of shared channels allocated to the base station are separate.

18. A method according to any one of the claims 1 to 16, wherein at least some of the sets that make up of the list of shared channels allocated to the base station have channels in common.

19. A base station for a communication system with terminals, comprising:

- means for obtaining, in connection with a control unit, a list of shared channels allocated to the base station and made up of multiple sets of shared channels;
means for selecting, for one of the terminals, one of the sets of shared channels; and
- means for indicating to said terminal by means of a dedicated channel, independently of the control unit, which set has been selected from the list allocated to the base station.

20. A base station according to claim 19, comprising multiple modules (200) to which are assigned the processes related to groups of channels respectively associated with said modules, and wherein each set of shared channels used by the base station is included in the group associated with one of the modules.

21. A base station according to claim 20, wherein the means for selecting the set of shared channels indicated to the terminal are configured so that said set is included in the same group of channels, associated with one of the modules, as said dedicated channel.

22. A base station according to claim 21, wherein means for selecting the set of shared channels indicated to the terminal are configured so that said set is included in the same group of channels as each dedicated channel established with said terminal.

23. A base station according to any one of the claims 19 to 22, wherein said shared channels list allocated to the base station is made up of signal channels from the base station to the terminals.

24. A base station according to claim 23, wherein the allocated list's shared signal channels are operative to transmit information enabling the terminals to receive the traffic carried by the shared traffic channels from the base station to the terminals.

25. A base station according to any one of the claims 19 to 24, wherein the means for indicating the selected set to the terminal are operative to redundantly indicate said selected set.

26. A base station according to any one of the claims 19 to 25, wherein said dedicated channel carries a stream of symbols to the terminal, and wherein the means for indicating the selected set to the terminal are operative to indicate said selected set while modifying the value of at least one symbol of said stream.

27. A base station according to claim 26, comprising means for periodically indicating said selected set to the terminal.

28. A base station according to claim 26 or 27, further comprising at least one module for interlacing the symbols transmitted on said dedicated channel, acting on an interlacing period, means for modifying, after interlacing, the value of at least two symbols of said stream of symbols is modified within an interlacing period, and means for choosing the positions of said symbols are chosen in such a way that symbols corresponding to said symbols before interlacing are dispersed within the stream of symbols.

29. A base station according to any one of the claims 26 to 28, comprising means for periodically indicating a second piece of information to the terminal, while modifying the value of at least one symbol of said stream carried by the dedicated channel, and means for choosing the positions of the symbols whose values are being modified, either for the indicating of said selected set or said second piece of information to the terminal, so that the symbols corresponding to said symbols before interlacing are dispersed within the stream of symbols.

30. A base station according to claim 29, wherein said second piece of information is an identifier (HI) of at least one of the shared channels of said selected set.

31. A base station according to any one of the claims 26 to 30, comprising means for transmitting the symbols whose value is being modified with a transmission power greater than the other symbols of the stream of symbols on said dedicated channel.

32. A terminal for a communication system comprising at least one base station and one control unit, and using channels shared with other terminals to communicate with the base station and at least one dedicated channel from the base station to said terminal, which terminal comprises:

- means for receiving from the control unit a list of shared channels allocated to the base station, made up of multiple sets of shared channels, for a communication session with the base station; and
- means for receiving from the base station, by means of said dedicated channel, an indication of one of the sets of shared channels selected by the base station for said terminal.

**33.** A terminal according to claim 32, wherein said list of shared channels is made up of signal channels from the base station to said terminal and to the other terminals.

**34.** A terminal according to claim 33, wherein said shared channels further comprise at least one traffic channel from the base station to said terminal and to the other terminals, and wherein the allocated list's shared signal channels are operative to transmit information enabling the terminals to receive the traffic carried by the shared traffic channels.

**35.** A terminal according to any one of the claims 32 to 34, wherein said selected set is received redundantly.

**36.** A terminal according to any one of the claims 32 to 35, wherein said dedicated channel carries a stream of symbols to the terminal, and comprising means for deducing, once said stream is received, said selected set by extracting at least one symbol that has a predetermined position in the stream of received symbols.

**37.** A terminal according to claim 36, further comprising at least one module for deinterlacing symbols received on said dedicated channel, acting on a deinterlacing period, and means for extracting, before deinterlacing, at least two symbols belonging to distinct time slots separated by a fixed period of said stream of symbols within an interlacing period, said extracted symbols having a variable predetermined position between two successive time slots containing said symbols.

**38.** A terminal according to claim 36 or 37, further comprising means for receiving a second piece of information with a stealing period and means for extracting at least two symbols of said stream carried by the dedicated channel, either for the indicating of said selected set or said second piece of information to the terminal, said extracted symbols having a predetermined position.

**39.** A terminal according to claim 38, wherein said second piece of information is an identifier (HI) of at least one of said selected set's shared channels.


**Patentansprüche**

**1.** Verfahren zum Steuern von Kommunikationskanälen zwischen einer Basisstation und Endgeräten, einschließlich von Kanälen, die gemeinsam von Endgeräten genutzt werden, um mit der besagten Basisstation zu kommunizieren, und von mindestens einem dedizierten Kanal von der Basisstation zu einem der Endgeräte, wobei das Verfahren die folgenden Schritte umfasst:

- Zuteilen einer Liste von gemeinsam genutzten Kanälen, welche aus mehreren Sätzen von gemeinsam genutzten Kanälen besteht, an die Basisstation;
- für eine Kommunikationssitzung zwischen der Basisstation und dem besagten Endgerät, Anzeigen, ab einem Steuerorgan, der der Basisstation zugeteilten Liste von gemeinsam genutzten Kanäle an die Basisstation; und
- auf Ebene der Basisstation, Auswählen eines der Sätze von gemeinsam genutzten Kanälen für das Endgerät, und unabhängig von dem Steuerorgan, Anzeigen, über den besagten dedizierten Kanal, des ausgewählten Satzes an das Endgerät

**2.** Verfahren nach Anspruch 1, wobei die Auswahl eines der Sätze von gemeinsam genutzten Kanälen für das Endgerät in Reaktion auf einen Befehl zur Konfiguration von Verarbeitungsressourcen (200) in der Basisstation erfolgt.

**3.** Verfahren nach Anspruch 2, wobei die besagten Verarbeitungsressourcen der Basisstation mehrere Module (200) umfassen, denen Verarbeitungsvorgänge in Bezug auf jeweils mit den besagten Modulen assoziierte Sätze von Kanälen zugewiesen sind, und wobei jeder von der Basisstation benutzte Satz von gemeinsam genutzten Kanälen in der mit einem der Module assoziierten Gruppe enthalten ist.

**4.** Verfahren nach Anspruch 3, wobei der dem Endgerät angezeigte Satz von gemeinsam genutzten Kanälen derart von der Basisstation ausgewählt wird, dass er derselben mit einem der Module assoziierten Gruppe von Kanälen angehört wie der besagte dedizierte Kanal.

**5.** Verfahren nach Anspruch 4, wobei der dem Endgerät angezeigte Satz von gemeinsam genutzten Kanälen derart von der Basisstation ausgewählt wird, dass er demselben Satz von Kanälen angehört wie jeder mit dem besagten Endgeräten aufgebaute dedizierte Kanal.

**6.** Verfahren nach einem beliebigen der vorstehenden Ansprüche, wobei sich die besagte der Basisstation zugeteilte Liste der gemeinsam genutzten Kanäle aus Signalisierungskanälen von der Basisstation zu den Endgeräten zusammensetzt.

**7.** Verfahren nach Anspruch 6, wobei die besagten gemeinsam genutzten Kanäle weiterhin mindestens einen Verkehrskanal von der Basisstation zu den Endgeräten umfassen, und wobei die gemeinsam genutzten Signalisierungskanäle der zugeteilten Liste für das Übertragen von Informationen, die dem Empfang des von den gemeinsam genutzten Verkehrskanälen transportierten Verkehrs an den Endgeräten dienen, vorgesehen sind.

**8.** Verfahren nach einem beliebigen der vorstehenden Ansprüche, wobei der besagte ausgewählte Satz dem Endgerät in redundanter Weise angezeigt wird.

**9.** Verfahren nach einem beliebigen der vorstehenden Ansprüche, wobei der besagte dedizierte Kanal einen für das Endgerät bestimmten Symbolstrom transportiert, und wobei der besagte ausgewählte Satz dem Endgerät unter Änderung des Wertes mindestens eines Symbols des besagten Stroms angezeigt wird.

**10.** Verfahren nach Anspruch 9, wobei der besagte ausgewählte Satz dem Endgerät periodisch angezeigt wird.

**11.** Verfahren nach Anspruch 9 oder 10, wobei die Basisstation weiterhin mindestens ein Modul zur Verschachtelung von auf dem besagten dedizierten Kanal übertragenen Symbolen umfasst, welches während einer Verschachtelungsperiode agiert, wobei man nach der Verschachtelung den Wert von mindestens zwei Symbolen des besagten Symbolstroms innerhalb einer Verschachtelungsperiode ändert, und wobei man die Position der besagten Symbole derart wählt, dass Symbole, die den besagten Symbolen vor der Verschachtelung entsprechen, innerhalb des Symbolstroms verstreut sind.

**12.** Verfahren nach einem beliebigen der Ansprüche 9 bis 11, wobei man dem Endgerät periodisch eine zweite Information unter Änderung des Wertes mindestens eines Symbols des besagten von dem dedizierten Kanal transportierten Stroms anzeigt, wobei man die Position der Symbole, deren Wert man ändert, unterschiedslos für das Anzeigen des besagten ausgewählten Satzes und der besagten zweiten Information an das Endgerät derart wählt, dass Symbole, die den besagten Symbolen vor der Verschachtelung entsprechen, innerhalb des Symbolstroms verstreut sind.

**13.** Verfahren nach Anspruch 12, wobei die besagte zweite Information eine Kennung (HI) mindestens eines der gemeinsam genutzten Kanäle des besagten ausgewählten Satzes enthält.

**14.** Verfahren nach einem beliebigen der Ansprüche 9 bis 13, wobei die Symbole, deren Wert man ändert, mit einer höheren Sendeleistung als die anderen Symbole des Symbolstroms auf dem besagten dedizierten Kanal übertragen werden.

**15.** Verfahren nach einem beliebigen der vorstehenden Ansprüche, wobei die Sätze, aus denen die der Basisstation zugeteilte Liste der gemeinsam genutzten Kanäle besteht, dieselbe Anzahl von Kanälen aufweisen.

**16.** Verfahren nach einem beliebigen der Ansprüche 1 bis 14, wobei zumindest einige der Sätze, aus denen die der Basisstation zugeteilte Liste der gemeinsam genutzten Kanäle besteht, unterschiedliche Kanalanzahlen aufweisen.

**17.** Verfahren nach einem beliebigen der vorstehenden Ansprüche, wobei die Sätze, aus denen die der Basisstation zugeteilte Liste der gemeinsam genutzten Kanäle besteht, getrennt sind.

**18.** Verfahren nach einem beliebigen der Ansprüche 1 bis 16, wobei zumindest einige der Sätze, aus denen die der Basisstation zugeteilte Liste der gemeinsam genutzten Kanäle besteht, gemeinsame Kanäle haben.

**19.** Basisstation für ein Kommunikationssystem mit Endgeräten, umfassend:

- Mittel zum Erhalten, in Verbindung mit einem Steuerorgan, einer der Basisstation zugeteilten und aus mehreren Sätzen von gemeinsam genutzten Kanälen bestehenden Liste von gemeinsam genutzten Kanälen;
- Mittel zum Auswählen, für eines der Endgeräte, eines der Sätze von gemeinsam genutzten Kanälen; und
- Mittel zum Anzeigen an das besagte Endgerät, über einen dedizierten Kanal, unabhängig von dem Steuerorgan, welcher Satz aus der der Basisstation zugeteilten Liste ausgewählt wird.

20. Basisstation nach Anspruch 19, welche mehrere Module (200) umfasst, denen Verarbeitungsvorgänge in Bezug auf jeweils mit den besagten Modulen assoziierte Gruppen von Kanälen zugewiesen sind, und wobei jeder von der Basisstation benutzte Satz von gemeinsam genutzten Kanälen in der mit einem der Module assoziierten Gruppe enthalten ist.

21. Basisstation nach Anspruch 20, wobei die Mittel zum Auswählen des dem Endgerät angezeigten Satzes von gemeinsam genutzten Kanälen derart eingerichtet sind, dass der besagte Satz in derselben mit einem der Module assoziierten Gruppe von Kanälen enthalten ist wie der besagte dedizierte Kanal.

22. Basisstation nach Anspruch 21, wobei die Mittel zum Auswählen des dem Endgerät angezeigten Satzes von gemeinsam genutzten Kanälen derart eingerichtet sind, dass der besagte Satz in derselben Gruppe von Kanälen wie jeder mit dem besagten Endgerät aufgebaute dedizierte Kanal enthalten ist.

23. Basisstation nach einem beliebigen der Ansprüche 19 bis 22, wobei sich die besagte der Basisstation zugeteilte Liste von gemeinsam genutzten Kanälen aus Signalisierungskanälen von der Basisstation zu den Endgeräten zusammensetzt.

24. Basisstation nach Anspruch 23, wobei die gemeinsam genutzten Signalisierungskanäle der zugeteilten Liste für die Übertragung von Informationen, die zum Empfang, an den Endgeräten, des von den gemeinsam genutzten Verkehrskanälen von der Basisstation zu den Endgeräten transportierten Verkehrs dienen, vorgesehen sind.

25. Basisstation nach einem beliebigen der Ansprüche 19 bis 24, wobei die Mittel zum Anzeigen des ausgewählten Satzes an das Endgerät derart eingerichtet sind, dass der besagte ausgewählte Satz in redundanter Weise angezeigt wird.

26. Basisstation nach einem beliebigen der Ansprüche 19 bis 25, wobei der besagte dedizierte Kanal einen für das Endgerät bestimmten Symbolstrom transportiert, und wobei die Mittel zum Anzeigen des ausgewählten Satzes an das Endgerät derart eingerichtet sind, dass der besagte ausgewählte Satz unter Änderung des Wertes mindestens eines Symbols des besagten Stroms angezeigt wird.

27. Basisstation nach Anspruch 26, umfassend Mittel zum periodischen Anzeigen des besagten ausgewählten Satzes an das Endgerät.

28. Basisstation nach Anspruch 26 oder 27, weiterhin umfassend mindestens ein Modul zur Verschachtelung von auf dem besagten dedizierten Kanal übertragenen Symbolen, welches während einer Verschachtelungsperiode agiert, Mittel zum Ändern, im Anschluss an die Verschachtelung, des Wertes von mindestens zwei Symbolen des besagten Symbolstroms innerhalb einer Verschachtelungsperiode, und Mittel zum Auswählen der Position der besagten Symbole, und zwar derart, dass Symbole, die den besagten Symbolen vor der Verschachtelung entsprechen, innerhalb des Symbolstroms verstreut sind.

29. Basisstation nach einem beliebigen der Ansprüche 26 bis 28, umfassend Mittel zum periodischen Anzeigen einer zweiten Information an das Endgerät unter Änderung des Wertes mindestens eines Symbols des von dem dedizierten Kanal transportierten Stroms, und Mittel zum Auswählen der Position der Symbole, deren Wert man ändert, unterschiedslos für das Anzeigen des besagten ausgewählten Satzes und der besagten zweiten Information an das Endgerät, und zwar derart, dass Symbole, die den besagten Symbolen vor der Verschachtelung entsprechen, innerhalb des Symbolstroms verstreut sind.

30. Basisstation nach Anspruch 29, wobei die besagte zweite Information eine Kennung (HI) mindestens eines der gemeinsam genutzten Kanäle des besagten ausgewählten Satzes enthält.

31. Basisstation nach einem beliebigen der Ansprüche 26 bis 30, umfassend Mittel zum Übertragen von Symbolen, deren Wert man ändert, mit einer höheren Sendeleistung als die anderen Symbole des Symbolstroms auf dem besagten dedizierten Kanal.

**32.** Endgerät für ein Kommunikationssystem mit mindestens einer Basisstation und einem Steuerorgan, wobei das Endgerät Kanäle, die es sich mit anderen Endgeräten teilt, um mit der Basisstation zu kommunizieren, und mindestens einen dedizierten Kanal von der Basisstation zu dem besagten Endgerät benutzt, wobei das Endgerät umfasst:

- Mittel zum Empfangen, von dem Steuerorgan, einer der Basisstation zugeteilten Liste von gemeinsam genutzten Kanälen, welche sich aus mehreren Sätzen von gemeinsam genutzten Kanälen zusammensetzt, für eine Kommunikationssitzung mit der Basisstation; und
- Mittel zum Empfangen, von der Basisstation und über den besagten dedizierten Kanal, einer Anzeige eines der von der Basisstation für das besagte Endgerät ausgewählten Sätze von gemeinsam genutzten Kanälen.

**33.** Endgerät nach Anspruch 32, wobei sich die besagte Liste der gemeinsam genutzten Kanäle aus Signalisierungskanälen von der Basisstation zu dem besagten Endgerät und zu den anderen Endgeräten zusammensetzt.

**34.** Endgerät nach Anspruch 33, wobei die besagten gemeinsam genutzten Kanäle weiterhin mindestens einen Verkehrskanal von der Basisstation zu dem besagten Endgerät und zu den anderen Endgeräten umfassen, und wobei die besagten gemeinsam genutzten Signalisierungskanäle der zugeteilten Liste für die Übertragung der Informationen, die dem Empfang des von den gemeinsam genutzten Verkehrskanälen transportierten Verkehrs an den Endgeräten dienen, vorgesehen sind.

**35.** Endgerät nach Anspruch 32 bis 34, wobei der besagte ausgewählte Satz in redundanter Weise empfangen wird.

**36.** Endgerät nach einem beliebigen der Ansprüche 32 bis 35, wobei der besagte dedizierte Kanal einen für das Endgerät bestimmten Symbolstrom transportiert, umfassend Mittel zum Deduzieren, unmittelbar nach Empfang des besagten Stroms, des besagten ausgewählten Satzes durch Extrahieren mindestens eines Symbols mit einer vorbestimmten Position in dem empfangenen Symbolstrom.

**37.** Endgerät nach Anspruch 36, weiterhin umfassend mindestens ein Modul zur Entschachtelung von auf dem besagten dedizierten Kanal empfangenen Symbolen, welches während einer Entschachtelungsperiode agiert, und Mittel zum Extrahieren, vor der Entschachtelung, von mindestens zwei Symbolen, die unterschiedlichen, durch eine festgelegte Periode getrennten Zeitschlitzen angehören, aus dem besagten Symbolstrom innerhalb einer Verschachtelungsperiode, wobei die besagten extrahierten Symbole eine vorbestimmte variable Position zwischen zwei aufeinanderfolgenden Zeitschlitzen, welche die besagten Symbole enthalten, haben.

**38.** Endgerät nach Anspruch 36 oder 37, weiterhin umfassend Mittel zum Empfangen einer zweiten Information mit einer Symbol-Stealing-Periode, und Mittel zum Extrahieren von mindestens zwei Symbolen aus dem besagten von dem dedizierten Kanal transportierten Strom, gleichermaßen für die Anzeige des besagten ausgewählten Satzes und der besagten zweiten Information an das Endgerät, wobei die besagten extrahierten Symbole eine vorbestimmte Position haben.

**39.** Endgerät nach Anspruch 38, wobei die besagte zweite Information eine Kennung (HI) mindestens eines der gemeinsam genutzten Kanäle des besagten ausgewählten Satzes ist.

1 TRAME
(10ms)

#0 #1 #2 #14

1 TIMES LOT
(666 µs)

DATA 1 TPC TFCi DATA 2 PL

FIG.1.

EP 1 461 969 B1

FIG.2.

FIG.3.

FIG.4.

FIG.5.

FIG.6.

BLOC DE TRANSPORT CODÉ

60

1$^{er}$ ENTRELACEMENT

61

SEGMENTATION EN TRAMES

62

2$^e$ ENTRELACEMENT

63

EP 1 461 969 B1

FIG.7.

GESTIONNAIRE DE TÂCHES ——204

TRAITEMENT NUMÉRIQUE

TRAITEMENT NUMÉRIQUE

200

TRAITEMENT NUMÉRIQUE

TRAITEMENT RADIO

201

TRAITEMENT RADIO

203

INTERFACE Iub

202

FIG.8.

EP 1 461 969 B1

31

| N° TRANCHE / N° TRAME | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| 0 | 0/13 | | | 3 | | | 6 | | | 9 | | | 12 | | |
| 1 | 3/1 | | | 6 | | | 9 | | | 12 | | | 0 | | |
| 2 | 6/4 | | | 9 | | | 12 | | | 0 | | | 3 | | |
| 3 | 9/7 | | | 12 | | | 0 | | | 3 | | | 6 | | |

FIG.9.

EP 1 461 969 B1